# EUROPEAN PATENT APPLICATION

(11) **EP 4 521 716 A1**
(43) Date of publication of application: **12.03.2025**
(21) Application number: 23814824.1
(22) Date of filing: 21.04.2023
(51) Int. Cl.: H04L 67/141

(54) **COMMUNICATION NODE, DATA TRANSMISSION METHOD, AND STORAGE MEDIUM**

(30) Priority: 31.05.2022 CN 202210613467
(71) Applicant: ZTE CORPORATION, Shenzhen, Guangdong 518057 (CN)
(72) Inventor: NIU, Li, Shenzhen, Guangdong 518057 (CN); DAI, Bo, Shenzhen, Guangdong 518057 (CN); LU, Ting, Shenzhen, Guangdong 518057 (CN); GAO, Yuan, Shenzhen, Guangdong 518057 (CN)
(74) Representative: Aipex B.V.
(86) International application number: PCT/CN2023/089937
(87) International publication number: WO 2023/231638

(57) **Abstract**

Provided are a communication node, a data transmission method, and a storage medium. A first communication node includes a first communication interface. The first communication node is connected to a second communication node through the first communication interface. Data transmitted between the first communication node and the second communication node through a protocol layer of a first Internet of things is data processed by a target communication node using a target processing method. The target communication node includes the first communication node and the second communication node, the target processing method is a method for processing data by the first communication node and the second communication node, and the protocol layer of the first Internet of things is a protocol layer included in the first communication node in the Internet of things. The first communication node is a passive communication node.

## Description

This application claims priority to Chinese Patent Application No. 202210613467.8 filed May 31, 2022, the disclosure of which is incorporated herein by reference in its entirety.

### TECHNICAL FIELD

The present disclosure relates to the field of communication technology and, in particular, to a communication node, a data transmission method, and a storage medium.

### BACKGROUND

Currently, the Internet of things (IoT) has been widely used in the commercial field such as smart grids, smart parking, intelligent transportation, and smart energy management systems. The IoT requires a large number of sensing devices for use in traditional and emerging industries such as agriculture, industry, environmental protection, urban management, and human health to achieve the Internet of everything.

### SUMMARY

In one aspect, embodiments of the present disclosure provide a first communication node. The first communication node includes a first communication interface. The first communication node is connected to a second communication node through the first communication interface. Data transmitted between the first communication node and the second communication node through a protocol layer of a first Internet of things is data processed by a target communication node using a target processing method. The target communication node includes the first communication node and the second communication node, the target processing method is a method for processing data by the first communication node and the second communication node, and the protocol layer of the first Internet of things is a protocol layer included in the first communication node in the Internet of things. The first communication node is a passive communication node.

In another aspect, the embodiments of the present disclosure further provide a second communication node. The second communication node includes a first communication interface and a second communication interface. The second communication node is connected to the first communication node of any embodiment of the present disclosure through the first communication interface. The second communication node is connected to a third communication node through the second communication interface. Data transmitted between the second communication node and the first communication node through a first set protocol layer is data processed by a target communication node using a target processing method, the target communication node includes the first communication node and the second communication node, and the target processing method is a method for processing data by the first communication node and the second communication node. The second communication node communicates with the third communication node through a second set protocol layer.

In another aspect, the embodiments of the present disclosure further provide a third communication node. The third communication node includes a second communication interface. The third communication node is connected to the second communication node of any embodiment of the present disclosure through the second communication interface. Data transmitted between the third communication node and the second communication node through a protocol layer of a third Internet of things is data processed by a target communication node using a target processing method, the target communication node includes a first communication node and the second communication node, and the target processing method is a method for processing data by the first communication node and the second communication node.

In another aspect, the embodiments of the present disclosure further provide a fourth communication node. The fourth communication node includes a third communication interface and a fourth communication interface. The fourth communication node is connected to the first communication node of any embodiment of the present disclosure through the third communication interface, and the fourth communication node is connected to a second communication node through the fourth communication interface. The fourth communication node forwards, through a third set protocol layer, data transmitted between the second communication node and the first communication node. The data transmitted between the second communication node and the first communication node is data processed by a target communication node using a target processing method, the target communication node includes the first communication node and the second communication node, and the target processing method is a method for processing data by the first communication node and the second communication node.

In another aspect, the embodiments of the present disclosure further provide a data transmission method applied by the first communication node according to an embodiment of the present disclosure. The method includes communicating with the second communication node through the protocol layer of the first Internet of things.

In another aspect, the embodiments of the present disclosure further provide a data transmission method applied by the second communication node according to an embodiment of the present disclosure. The method includes communicating with a first communication node through a first set protocol layer and communicating with a third communication node through a second set protocol layer.

In another aspect, the embodiments of the present disclosure further provide a data transmission method applied by the third communication node according to an embodiment of the present disclosure. The method includes communicating with the second communication node through the protocol layer of the third Internet of things.

In another aspect, the embodiments of the present disclosure further provide a data transmission method applied by the fourth communication node according to an embodiment of the present disclosure. The method includes communicating with a first communication node and a second communication node through a third set protocol layer.

In another aspect, the embodiments of the present disclosure further provide a computer-readable storage medium. The computer-readable storage medium stores a computer program which, when executed by a processor, causes the processor to perform the preceding data transmission method.

### BRIEF DESCRIPTION OF DRAWINGS

FIG. 1 is a structure diagram of a first communication node according to some embodiments.
FIG. 2 is a flowchart of a data transmission method according to some embodiments.
FIG. 3 is a structure diagram of a second communication node according to some embodiments.
FIG. 4 is a structure diagram of dedicated signaling according to some embodiments.
FIG. 5 is a flowchart of network selection according to some embodiments.
FIG. 6 is another flowchart of network selection according to some embodiments.
FIG. 7 is a flowchart of authentication and authorization according to some embodiments.
FIG. 8 is a flowchart of another data transmission method according to some embodiments.
FIG. 9 is a structure diagram of a third communication node according to some embodiments.
FIG. 10 is a flowchart of another data transmission method according to some embodiments.
FIG. 11 is a structure diagram of a fourth communication node according to some embodiments.
FIG. 12 is a flowchart of another data transmission method according to some embodiments.
FIG. 13 is a network deployment diagram of the Internet of things according to some embodiments.
FIG. 14 is a block diagram of a first communication architecture of the Internet of things according to some embodiments.
FIG. 15 is a block diagram of a second communication architecture of the Internet of things according to some embodiments.
FIG. 16 is a block diagram of a third communication architecture of the Internet of things according to some embodiments.
FIG. 17 is a block diagram of a fourth communication architecture of the Internet of things according to some embodiments.
FIG. 18 is a block diagram of a fifth communication architecture of the Internet of things according to some embodiments.
FIG. 19 is a block diagram of a sixth communication architecture of the Internet of things according to some embodiments.
FIG. 20 is a block diagram of a seventh communication architecture of the Internet of things according to some embodiments.
FIG. 21 is a flowchart of data exchanges between communication nodes in the Internet of things according to some embodiments.
FIG. 22 is another flowchart of data exchanges between communication nodes in the Internet of things according to some embodiments.
FIG. 23 is another flowchart of data exchanges between communication nodes in the Internet of things according to some embodiments.
FIG. 24 is another flowchart of data exchanges between communication nodes in the Internet of things according to some embodiments.

### DETAILED DESCRIPTION

To make the objects, technical solutions, and advantages of the present disclosure more apparent, embodiments of the present disclosure are described hereinafter in detail in conjunction with the drawings. It is to be noted that if not in collision, the embodiments of the present disclosure and features therein may be combined with each other in any manner.

The operations illustrated in the flowcharts may be performed by, for example, a computer system capable of executing a set of computer-executable instructions. Moreover, although logical sequences are illustrated in the flowcharts, the operations illustrated or described in the flowcharts may be performed in logical sequences different from those described herein in some cases.

Hereinafter, terms such as "first" and "second" are used for the purpose of description and are not to be construed as indicating or implying relative importance or implicitly indicating the number of technical features indicated.

Currently, the Internet of things based on narrowband Internet of things (NB-IoT) and Long-Term Evolution (LTE) enhanced MTO (eMTC) has been widely used in the commercial field such as smart grids, smart parking, intelligent transportation/logistics, and smart energy management systems. The Internet of things is also involved in vertical fields such as smart cities and smart homes and rapidly promotes the upgrade and transformation of traditional industries. A smart parking system can satisfy the deep coverage requirement of an underground scenario and can implement, based on multiple types of sensors, functions such as searching for a parking spot, monitoring a status of a parking lot, and zone information display. A smart grid system can implement functions such as smart metering and autonomous fault reporting. The eMTC-based Internet of things can achieve functions such as vehicle tracking and item tracking and therefore can be applied to the industries of transportation, logistics, and shared bicycles.

The large-scale application of the Internet of things brings rich market and technical demands, and new Internet of things applications emerge continuously. It is foreseeable that in the future, a large number of sensors, Internet of things devices, or modules of other types will be applied to traditional and emerging industries such as agriculture, industry, environmental protection, urban management, and human health. In one aspect, the Internet of things may be applied to the field of libraries. All books in a smart library may be equipped with electronic tags so that the movement of books throughout the library is tracked all the time, and book searching and positioning, the statistics of the quantity or states of books, and the like can also be completed in real time. In another aspect, the Internet of things may be applied to the field of warehousing and logistics. Administrators can electronically record, query, and track items by using radiofrequency identification (RFID)-based tag terminals. However, since the administrators need to read tags in sequence with a dedicated device, which requires a very huge amount of work, smarter operations are required. In another aspect, the Internet of things may be applied to the field of agriculture. Limited by economic levels, traditional agriculture is still not as modernized as expected. However, the future agriculture is certain to become more modernized and intelligent. For example, various sensors may monitor, in real time, crop growth conditions such as soil, water, light, and fertility and conditions such as pests and crop growth, and small controllers may adjust the crop growth conditions in real time and handle disasters in time according to monitoring data. Of course, many potential Internet of things applications are not listed, such as more advanced wearable or medical devices including patches attachable to teeth to monitor oral diseases or dietary health and micro-robots that can enter blood vessels to treat diseases.

The preceding Internet of things applications have proposed requirements with relatively large differences from those of current Internet of things applications. For example, the preceding Internet of things applications require a large number of terminal devices, and many terminal devices need to be tiny in size and require simple hardware structures (for example, hardware structures in which no batteries are integrated). Moreover, even if the terminal devices can be integrated with batteries, a wide diversity of service modes makes it difficult for each terminal device to work for a relatively long time with one battery. Since the number of terminal devices is relatively huge, charging the terminal devices or replacing their batteries requires enormous human and material resources and is difficult or even impossible to complete. However, such Internet of things applications are one of the key parts to the future Internet of everything.

The deployment of the Internet of things on a large scale is limited by the energy consumption and deployment and maintenance costs of sensors. Moreover, how to enable a first communication node performing passive communication to access the Internet of things is a current problem to be solved urgently. A Wireless Powered Communication Network (WPCN) which is also known as passive IoT is a communication technology that becomes a breakthrough solution to the preceding Internet of things application problems.

To solve the preceding problems, some embodiments of the present disclosure provide a first communication node.

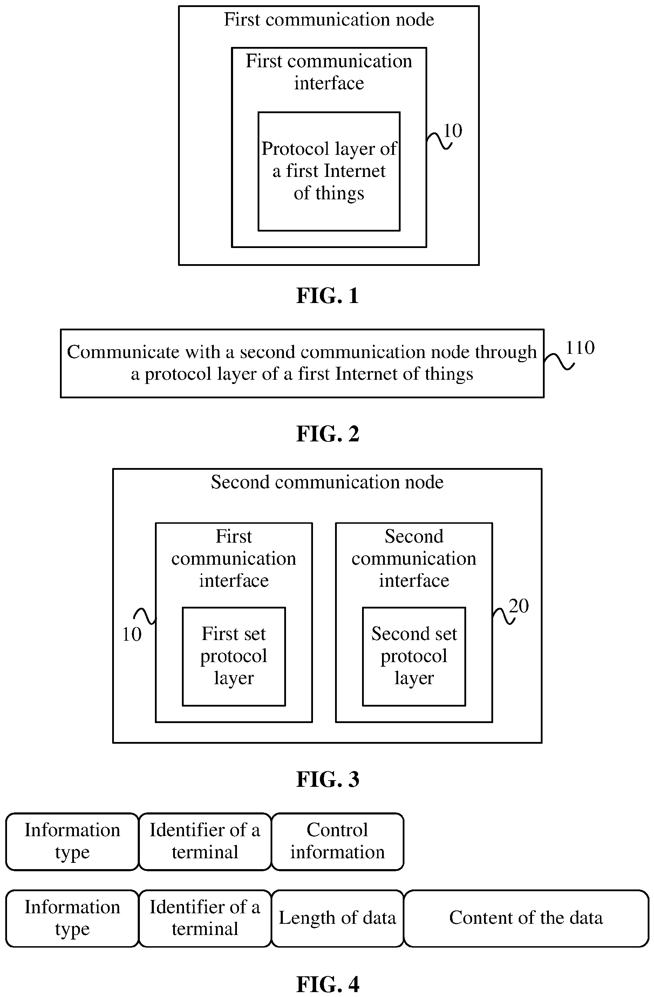

FIG. 1 is a structure diagram of a first communication node according to some embodiments. The first communication node may be a passive communication node such as a passive communication terminal device. As shown in FIG. 1, the first communication node includes a first communication interface 10. The first communication node is connected to a second communication node (for example, a base station) through the first communication interface 10. The second communication node is described hereinafter.

Data transmitted between the first communication node and the second communication node through a protocol layer of a first Internet of things is data processed by a target communication node using a target processing method. The target communication node includes the first communication node and the second communication node. The target processing method is a method for processing data by the first communication node and the second communication node. The protocol layer of the first Internet of things is a protocol layer included in the first communication node in the Internet of things.

It is to be noted that passive communication may be understood as that the first communication node can communicate with another communication node (for example, the second communication node) only after receiving a signal transmitted by the another communication node and cannot actively communicate with another communication node. The first communication interface 10 may refer to an interface for data transmission between the first communication node and the second communication node.

In some embodiments, the first communication node may be a passive or semi-passive device.

In some embodiments, the first communication node may be a terminal device with the RFID technology, and the first communication node may communicate by using the backscatter technology.

The RFID technology is one automatic identification technology and implements contactless bi-directional data communication in a radio frequency manner, where an electronic tag or a radio frequency card is read and written in the radio frequency manner for the purpose of object identification and data exchanges.

In some embodiments, the protocol layer of the first Internet of things may include one or more of a first protocol layer of the first Internet of things, a second protocol layer of the first Internet of things, a third protocol layer of the first Internet of things, or a fourth protocol layer of the first Internet of things.

For example, the protocol layer of the first Internet of things includes first protocol layer of the first Internet of things and second protocol layer of the first Internet of things; the protocol layer of the first Internet of things includes the first protocol layer of the first Internet of things, the second protocol layer of the first Internet of things, and the third protocol layer of the first Internet of things; the protocol layer of the first Internet of things includes the first protocol layer of the first Internet of things, the second protocol layer of the first Internet of things, and the fourth protocol layer of the first Internet of things; or the protocol layer of the first Internet of things includes the first protocol layer of the first Internet of things, the second protocol layer of the first Internet of things, the third protocol layer of the first Internet of things, and the fourth protocol layer of the first Internet of things.

The first protocol layer of the first Internet of things may implement a signal transmission function, the second protocol layer of the first Internet of things may implement a processing function, the third protocol layer of the first Internet of things may implement a processing function, and the fourth protocol layer of the first Internet of things may implement a processing function using the target processing method.

In some examples, a function of the first protocol layer of the first Internet of things includes transmitting data exchanged between the first communication node and the second communication node.

A function of the second protocol layer of the first Internet of things includes one or more of: generating a data packet, decoding a data packet, scheduling a data packet, transmitting a data packet, concatenating multiple data packets, extracting a data packet, maintaining a state, encryption, decryption, integrity protection, or generating a command identifiable by the second communication node.

A function of the third protocol layer of the first Internet of things includes one or more of: maintaining the state, the encryption, the decryption, the integrity protection, storage and configuration, filling in a message, generating a message, or executing a control procedure.

A function of the fourth protocol layer of the first Internet of things includes processing data using one or more of the following target processing methods: the encryption, the decryption, the integrity protection, or generating the command identifiable by the second communication node.

It is to be noted that concatenating the multiple data packets may refer to concatenating multiple messages of the first communication node or a third communication node. The third communication node is an upper-layer node of the second communication node, for example, a core network. The third communication node is described hereinafter.

Maintaining the state may refer to maintaining a state of a transmission process and a state of the first communication node. The state of the first communication node includes whether the first communication node is reachable, whether the first communication node is silent, whether the first communication node is inactive, and whether the first communication node is locked. Of course, the state of the first communication node may also include other states, which are not limited in the present disclosure. The integrity protection may refer to protecting integrity of the transmitted data.

The storage and configuration may refer to storage and configuration of data. Executing the control procedure may refer to executing a related procedure of inventory or access control. The message may refer to control information exchanged between the second communication node and the first communication node.

The encryption may refer to generating the data packet according to an encryption key or algorithm jointly determined by the first communication node and the second communication node. The decryption may refer to decoding the data packet according to a decryption key or algorithm jointly determined by the first communication node and the second communication node. The integrity protection may refer to generating or decoding the data packet according to an integrity protection algorithm jointly determined by the first communication node and the second communication node.

In the embodiments of the present disclosure, the target communication node may include the first communication node and the second communication node. The target processing method may be the method for processing data by the first communication node and the second communication node. For example, the target processing method may be a method determined after the first communication node negotiates with the second communication node, or the target processing method may be a method indicated by the third communication node to the first communication node. How the first communication node and the second communication node determine the target processing method is not limited in the present disclosure as long as it is ensured that the first communication node and the second communication node use the same target processing method. The data may be transmitted between the first communication node and the second communication node in a non-pass-through manner. The first communication node, the second communication node, and the third communication node are each a communication node in the Internet of things.

Additionally, the first communication node in the Internet of things performs data transmission with the second communication node through the protocol layer of the first Internet of things so that the first communication node accesses the Internet of things, thereby implementing data transmission between communication nodes in the Internet of things.

In some embodiments, the protocol layer of the first Internet of things of the first communication interface 10 includes the first protocol layer of the first Internet of things and the second protocol layer of the first Internet of things.

The function of the first protocol layer of the first Internet of things includes transmitting the data exchanged between the first communication node and the second communication node. For example, the function of the first protocol layer of the first Internet of things includes one or more of sending a signal or receiving a signal.

The function of the second protocol layer of the first Internet of things includes one or more of: generating the data packet, decoding the data packet, scheduling the data packet, transmitting the data packet, concatenating the multiple data packets, extracting the data packet, maintaining the state, the encryption, the decryption, the integrity protection, or generating the command identifiable by the second communication node.

In the embodiments of the present disclosure, the protocol layer of the first Internet of things may include the first protocol layer of the first Internet of things and the second protocol layer of the first Internet of things. The first protocol layer of the first Internet of things may be an Internet of things port physical (IoT PHY) protocol layer of the first communication node, and the second protocol layer of the first Internet of things may be an Internet of things media access control (IoT MAC) protocol layer of the first communication node.

It is to be noted that in the case where the protocol layer of the first Internet of things does not include the fourth protocol layer of the first Internet of things, the function included in the fourth protocol layer of the first Internet of things may be integrated into the second protocol layer of the first Internet of things. The second protocol layer of the first Internet of things may process data using one or more of the target processing methods: the encryption, the decryption, or the integrity protection.

In some embodiments, the protocol layer of the first Internet of things further includes the third protocol layer of the first Internet of things, where the function of the third protocol layer of the first Internet of things includes one or more of: maintaining the state, the encryption, the decryption, the integrity protection, the storage and configuration, filling in the message, generating the message, or executing the control procedure. Of course, the function of the third protocol layer of the first Internet of things is not limited thereto.

In the embodiments of the present disclosure, the third protocol layer of the first Internet of things may be an IoT manage protocol layer of the first communication node.

It is to be noted that when the protocol layer of the first Internet of things includes the second protocol layer of the first Internet of things and the third protocol layer of the first Internet of things, the function of the second protocol layer of the first Internet of things may not include the encryption, the decryption, or the integrity protection, and the third protocol layer of the first Internet of things may include functions such as the encryption, the decryption, and the integrity protection.

In some embodiments, the protocol layer of the first Internet of things further includes the fourth protocol layer of the first Internet of things, where the function of the fourth protocol layer of the first Internet of things includes processing data using one or more of the following target processing methods: the encryption, the decryption, the integrity protection, or generating the command identifiable by the second communication node. Of course, the function of the fourth protocol layer of the first Internet of things is not limited thereto.

In the embodiments of the present disclosure, the fourth protocol layer of the first Internet of things may be an IoT transfer protocol layer of the first communication node.

It is to be noted that when the protocol layer of the first Internet of things includes the third protocol layer of the first Internet of things and the fourth protocol layer of the first Internet of things, the third protocol layer of the first Internet of things may include the functions such as the encryption, the decryption, and the integrity protection.

FIG. 2 is a flowchart of a data transmission method according to some embodiments.

Some embodiments of the present disclosure provide a data transmission method. The data transmission method may be applied by the first communication node of any embodiment of the present disclosure. As shown in FIG. 2, the method includes 110.

In 110, communication with a second communication node is performed through a protocol layer of a first Internet of things.

Data transmitted between the first communication node and the second communication node through the protocol layer of the first Internet of things is data processed by a target communication node using a target processing method. The target communication node includes the first communication node and the second communication node. The target processing method is a method for processing data by the first communication node and the second communication node. The protocol layer of the first Internet of things is a protocol layer included in the first communication node in the Internet of things. A communication manner between the first communication node and the second communication node is not limited in the present disclosure.

In some embodiments, the first communication node may communicate with the second communication node through a first protocol layer of the first Internet of things and a second protocol layer of the first Internet of things included in the protocol layer of the first Internet of things.

In some embodiments, the first communication node may communicate with a fourth communication node (for example, a relay) through the first protocol layer of the first Internet of things and the second protocol layer of the first Internet of things included in the protocol layer of the first Internet of things to communicate with the second communication node via the fourth communication node.

In some embodiments, the first communication node may communicate with the second communication node through the first protocol layer of the first Internet of things, the second protocol layer of the first Internet of things, and a third protocol layer of the first Internet of things included in the protocol layer of the first Internet of things.

In some embodiments, the first communication node may communicate with the second communication node through the first protocol layer of the first Internet of things, the second protocol layer of the first Internet of things, the third protocol layer of the first Internet of things, and a fourth protocol layer of the first Internet of things included in the protocol layer of the first Internet of things.

In some embodiments, the first communication node may communicate with the fourth communication node through the first protocol layer of the first Internet of things, the second protocol layer of the first Internet of things, the third protocol layer of the first Internet of things, and the fourth protocol layer of the first Internet of things included in the protocol layer of the first Internet of things to communicate with the second communication node via the fourth communication node.

In the embodiments of the present disclosure, the first communication node may communicate with the second communication node through the protocol layer of the first Internet of things, thereby implementing communication between communication nodes in the Internet of things.

FIG. 3 is a structure diagram of a second communication node according to some embodiments.

Some embodiments of the present disclosure provide a second communication node. As shown in FIG. 3, the second communication node includes a first communication interface 10 and a second communication interface 20. The second communication node is connected to the first communication node of any embodiment of the present disclosure through the first communication interface 10. The second communication node is connected to a third communication node through the second communication interface 20. The second communication interface 20 may refer to an interface for data transmission between the second communication node and the third communication node.

Data transmitted between the second communication node and the first communication node through a first set protocol layer is data processed by a target communication node using a target processing method. The target communication node includes the first communication node and the second communication node. The target processing method is a method for processing data by the first communication node and the second communication node.

The second communication node communicates with the third communication node through a second set protocol layer.

The first set protocol layer may include a protocol layer of a second Internet of things which includes one or more of a first protocol layer of the second Internet of things, a second protocol layer of the second Internet of things, a third protocol layer of the second Internet of things, or a fourth protocol layer of the second Internet of things. For example, the protocol layer of the second Internet of things includes the first protocol layer of the second Internet of things and the second protocol layer of the second Internet of things; the protocol layer of the second Internet of things includes the first protocol layer of the second Internet of things, the second protocol layer of the second Internet of things, and the fourth protocol layer of the second Internet of things; or the protocol layer of the second Internet of things includes the first protocol layer of the second Internet of things, the second protocol layer of the second Internet of things, the third protocol layer of the second Internet of things, and the fourth protocol layer of the second Internet of things.

The first set protocol layer may further include a first user plane protocol stack or a first control plane protocol stack.

The second set protocol layer may include a fifth protocol layer of the second Internet of things.

In the embodiments of the present disclosure, the second communication node in the Internet of things performs data transmission with the first communication node through the first set protocol layer and performs data transmission with the third communication node through the second set protocol layer, thereby implementing data transmission between communication nodes in the Internet of things.

In some embodiments, the protocol layer of the second Internet of things includes the first protocol layer of the second Internet of things and the second protocol layer of the second Internet of things.

A function of the first protocol layer of the second Internet of things includes transmitting data exchanged between the first communication node and the second communication node. In some examples, the function of the first protocol layer of the second Internet of things may include one or more of receiving a signal or sending a signal. For example, the second communication node receives, through the first protocol layer of the second Internet of things, data fed back by the first communication node to the second communication node, and/or the second communication node sends data to the first communication node through the first protocol layer of the second Internet of things.

A function of the second protocol layer of the second Internet of things includes one or more of: generating a data packet, decoding a data packet, scheduling a data packet, transmitting a data packet, concatenating multiple data packets, maintaining a state, encryption, decryption, integrity protection, or generating a command identifiable by the first communication node. The function of the second protocol layer of the second Internet of things is not limited in the present disclosure.

The first protocol layer of the second Internet of things may refer to an IoT PHY protocol layer of the second communication node, and the second protocol layer of the second Internet of things may refer to an IoT MAC protocol layer of the second communication node.

In some embodiments, the protocol layer of the second Internet of things may include the first protocol layer of the second Internet of things and the second protocol layer of the second Internet of things. The second communication node may exchange data with a fourth communication node through the first communication interface 10 so that the fourth communication node forwards data sent by the second communication node to the first communication node.

In some embodiments, the protocol layer of the second Internet of things further includes the third protocol layer of the second Internet of things. A function of the third protocol layer of the second Internet of things includes one or more of: maintaining the state, the encryption, the decryption, the integrity protection, storage and configuration, filling in a message, generating a message, or executing a control procedure. Of course, the function of the third protocol layer of the second Internet of things is not limited thereto.

In the embodiments of the present disclosure, the third protocol layer of the second Internet of things may refer to an IoT manage protocol layer of the second communication node.

In some embodiments, filling in the message may be filling in a radio resource control (RRC) message carrying a non-access stratum (NAS) data packet.

In some embodiments, the second set protocol layer of the second communication interface 20 includes the fifth protocol layer of the second Internet of things, where a function of the fifth protocol layer of the second Internet of things includes one or more of the functions below.

Data exchanged between the second communication node and the third communication node is generated based on an interface rule between the second communication node and the third communication node.

Data exchanged between the third communication node and the second communication node is transmitted.

Data transmitted from the third communication node is parsed. Of course, the function of the fifth protocol layer of the second Internet of things is not limited thereto.

The fifth protocol layer of the second Internet of things may refer to an Internet of things access point (IoT AP) protocol layer of the second communication node.

In the embodiments of the present disclosure, the second set protocol layer of the second communication interface 20 includes the fifth protocol layer of the second Internet of things, and the second communication node may exchange data with the third communication node through the second communication interface 20.

In some embodiments, the protocol layer of the second Internet of things further includes the fourth protocol layer of the second Internet of things, where a function of the fourth protocol layer of the second Internet of things includes processing data using one or more of the following target processing methods: the encryption, the decryption, the integrity protection, or generating the command identifiable by the first communication node. Of course, the function of the fourth protocol layer of the second Internet of things is not limited thereto.

The fourth protocol layer of the second Internet of things may refer to an IoT transfer protocol layer of the second communication node.

It is to be noted that the encryption may refer to generating the data packet according to an encryption key or algorithm jointly determined by the first communication node and the second communication node. The decryption may refer to decoding the data packet according to a decryption key or algorithm jointly determined by the first communication node and the second communication node. The integrity protection may refer to generating or decoding the data packet according to an integrity protection algorithm jointly determined by the first communication node and the second communication node.

In some embodiments, the first set protocol layer further includes the first user plane protocol stack or the first control plane protocol stack.

The first user plane protocol stack may refer to a user plane protocol stack of the second communication node. For example, when the second communication node has the first user plane protocol stack, the second communication node may process a data packet and send the processed data packet to the fourth communication node through the first user plane protocol stack to forward data to the first communication node via the fourth communication node and complete an exchange between the second communication node and the first communication node.

The first user plane protocol stack may include one or more of: a Service Data Adaptation Protocol (SDAP) layer, a Packet Data Convergence Protocol (PDCP) layer, a radio link control (RLC) protocol layer, a media access control (MAC) protocol layer, or a port physical (PHY) protocol layer.

The first control plane protocol stack may refer to a control plane protocol stack of the second communication node. For example, when the second communication node has the first control plane protocol stack, the second communication node may process the data packet and send the processed data packet to the fourth communication node through the first control plane protocol stack to forward the data to the first communication node via the fourth communication node and complete the exchange between the second communication node and the first communication node.

The first control plane protocol stack may include one or more of: an RRC protocol layer, the PDCP layer, the RLC protocol layer, the MAC protocol layer, or the PHY protocol layer.

In some embodiments, a message received from the third communication node includes first control information, and the first control information includes one or more of a first message type, an identifier of the first communication node, a first connection identifier, first indication information, a first feedback format, or first command content.

The first message type indicates a type of a message (for example, a type of a command).

The first connection identifier indicates an identifier of a connection between the second communication node and the third communication node.

The first indication information indicates processing performed on the message.

The first feedback format indicates a format in which the first communication node provides feedback.

In the embodiments of the present disclosure, the first control information may include one or more of the first message type, the identifier of the first communication node, the first connection identifier, the first indication information, the first feedback format, or the first command content. The first control information is not limited in the present disclosure.

In some examples, an upper-layer node (that is, the third communication node) sends a control message to a base station (that is, the second communication node) through first control signaling (that is, the first control information). The control message includes a command for a terminal (that is, the first communication node). For example, the upper-layer node carries the control message in the first control signaling and sends the first control signaling to the base station through an IoT AP protocol layer.

The first control information may include one or more of a message type (that is, the first message type), an identifier of the terminal (that is, the identifier of the first communication node), a connection identifier (that is, the first connection identifier), an information indication (that is, the first indication information), command content (that is, the first command content), or a feedback format (that is, the first feedback format).

The message type may refer to the type of the message carried (for example, the type of the command).

The identifier of the terminal may include identifiers of multiple terminals or one identifier associated with multiple terminals.

The connection identifier may be an identifier of a connection between the base station and the upper-layer node.

The information indication may refer to an indication of processing performed on a data packet through an encryption algorithm and an integrity protection algorithm.

The feedback format may refer to a format in which the terminal provides feedback (for example, information to be carried and feedback content).

The command content may refer to a position of a memory on which an operation is performed, an action of the operation (for example, a read command), and the like.

In some embodiments, a message sent to the third communication node includes second control information, and the second control information includes one or more of: a second message type, the identifier of the first communication node, a second connection identifier, second indication information, an execution result of the first communication node, or feedback of a result.

The second message type indicates a type of a message (for example, the type of the command).

The second connection identifier indicates the identifier of the connection between the second communication node and the third communication node.

The second indication information indicates processing performed on the message.

In the embodiments of the present disclosure, the second control information may include one or more of the second message type, the identifier of the first communication node, the second connection identifier, the second indication information, the execution result of the first communication node, or the feedback of the result. The second control information is not limited in the present disclosure.

In some examples, the terminal or the base station may send feedback of the terminal to the base station or the upper-layer node through second control signaling (that is, the second control information). After performing a transmission process, the base station sends the feedback of the terminal to a core network (for example, the upper-layer node). For example, after receiving the feedback of the terminal, the base station carries feedback information in the second control signaling and reports the feedback information to the upper-layer node through the IoT AP protocol layer.

The second control signaling may include one or more of a data type (that is, the second message type), the identifier of the terminal (that is, the identifier of the first communication node), a connection identifier (that is, the second connection identifier), an information indication (that is, the second indication information), an execution result (that is, the execution result of the first communication node), or the feedback of the result.

The data type may refer to the type of the message carried (for example, the type of the command).

The identifier of the terminal may include identifiers of multiple terminals or one identifier associated with multiple terminals.

The connection identifier may be the identifier of the connection between the base station and the upper-layer node.

The information indication may refer to an indication of processing performed on a data packet carried (for example, whether the encryption or integrity protection is performed).

The execution result may refer to whether the execution result of the first communication node is a success.

The feedback of the result may refer to a result of the operation (for example, feedback for the read command), the content of the memory, and the like.

In some embodiments, an exchange manner between the second communication node and the first communication node includes broadcasting or paging. Broadcasting or paging signaling is sent in a selection procedure or an inventory procedure, and one or more of the following information is broadcasted: information about a network, information about the terminal, or information about an inventory. Of course, the broadcasted information is not limited in the present disclosure.

In the embodiments of the present disclosure, the broadcasting may be a manner of sending to some or all terminals by the base station. The broadcasting mainly refers to that the base station sends the information about the network and/or the information about the terminal. Here, the information about the network may include an identifier of the network, an agreement between the network and the terminal, and encryption and decryption algorithms and an integrity protection algorithm supported by the network. The information about the terminal may include identifiers of some terminals (for example, a common identifier of some terminals).

The broadcasting signaling may be sent in the selection procedure. For example, the second communication node broadcasts at least one of selection signaling or inventory signaling. After receiving the broadcasting signaling, the terminal may perform a configuration such as network selection, authentication, the encryption and decryption, or the integrity protection. If the configuration of the terminal is consistent with that in the broadcasting signaling, the terminal considers that it is selected.

The broadcasting signaling may be sent in the inventory procedure to control a sequence of the feedback information of the terminal.

In some embodiments, the exchange manner between the second communication node and the first communication node includes transmitting dedicated signaling. The dedicated signaling is sent in the inventory procedure or an access procedure.

The dedicated signaling instructs the first communication node to send the feedback information to the second communication node; or the dedicated signaling instructs the second communication node to send to the first communication node one or more of an access command, the information about the terminal, or a configuration of the network.

In some examples, the dedicated signaling may refer to a manner of sending to one terminal by the base station or a manner of sending to the base station by the terminal. For example, the dedicated signaling may refer to that the base station sends the access command, the information about the terminal, and the configuration of the network to one terminal. Here, the access command refers to an operation of the network on the terminal, such as the read command or a write command. The configuration of the network includes encryption and decryption algorithms and an integrity protection algorithm configured by the network. The information about the terminal includes the identifier of the terminal.

The dedicated signaling may refer to that the terminal sends a feedback message to the base station.

The dedicated signaling may be sent in the inventory procedure so that the terminal sends the feedback message to the base station.

The dedicated signaling may be sent in the access procedure so that the base station sends the access command to the terminal and the terminal sends the feedback message to the base station.

FIG. 4 is a structure diagram of dedicated signaling according to some embodiments.

In some embodiments, as shown in FIG. 4, the dedicated signaling may carry the identifier of the terminal, the dedicated signaling may include the identifier of the terminal and control information or include the identifier of the terminal and a protocol data unit (PDU), and the dedicated signaling is sent to a tag. The PDU may include the length of data and the content of the data.

In some embodiments, the message received from the third communication node includes one or more of: type information of the first communication node (that is, indication information of a preset terminal); the identifier of the first communication node; partial data of the identifier of the first communication node; a range within which the message is sent; an identifier of a group of first communication nodes; an encryption key; the encryption and decryption algorithms; the integrity protection algorithm; an agreement between the network and the first communication node; a resource for the connection between the third communication node and the second communication node; or the access command.

Here, the preset terminal may refer to a tag based on the RFID technology. A size of the data packet may refer to the number of feedback messages of the first communication node included in the data packet.

In the embodiments of the present disclosure, the third communication node may trigger the second communication node to establish a connection with the first communication node. The third communication node sends the message to the second communication node. The message may include one or more of the indication information of the preset terminal, the identifier of the first communication node, the partial data of the identifier of the first communication node, the range within which the message is sent, the identifier of the group of first communication nodes, the encryption key, the encryption and decryption algorithms, the integrity protection algorithm, the agreement between the network and the first communication node, or the resource for the connection between the third communication node and the second communication node.

The third communication node may initiate the access procedure to the first communication node according to the feedback from the second communication node. The third communication node sends the message to the second communication node, where the message may include an INITIAL CONTEXT SETUP REQUEST, a DOWNLINK NAS TRANSPORT message, or another message. The message may include one or more of the indication information of the preset terminal, the access command, the encryption key, the encryption and decryption algorithms, or the integrity protection algorithm. The access command may include one or more of the identifier of the first communication node, a type of the access command, the content of the access command, a size of the access command, or a format of a feedback command.

Additionally, the third communication node may choose to release the first communication node. For example, the message sent by the third communication node to the second communication node may include a first communication node context release command or another message. The message may include one or more of the indication information of the preset terminal, the identifier of the first communication node, or partial information of the identifier of the first communication node.

In the embodiments of the present disclosure, the third communication node may trigger the second communication node to establish the connection with the first communication node, and the third communication node sends the message to the second communication node. The message may include the INITIAL CONTEXT SETUP REQUEST, DOWNLINK NAS TRANSPORT, or another message. The message may include one or more of the indication information of the preset terminal, the identifier of the first communication node, the partial information of the identifier of the first communication node, the range within which the message is sent, the identifier of the group of first communication nodes, the encryption key, the encryption and decryption algorithms, the integrity protection algorithm, the agreement between the network and the first communication node, the resource for the connection between the third communication node and the second communication node, or the access command. Here, the access command may include one or more of the identifier of the first communication node, the type of the access command, the content of the access command, the size of the access command, or the format of the feedback command.

In some embodiments, a message sent to the third communication node includes one or more of: the type information of the first communication node (that is, the indication information of the preset terminal); the identifier of the first communication node; the partial data of the identifier of the first communication node; or feedback of the first communication node.

In the embodiments of the present disclosure, after receiving the feedback of the first communication node, the second communication node may determine a selected first communication node and send information about the selected first communication node to the third communication node. The message sent by the second communication node to the third communication node may include initial information about the first communication node, an UPLINK NAS TRANSPORT message, or another message. The message may include one or more of the indication information of the preset terminal, the identifier of the first communication node, the partial data of the identifier of the first communication node, or the feedback of the first communication node. The feedback may include one or more of the identifier of the first communication node, the content of the feedback, a size of the feedback message, or whether the feedback succeeds.

The message sent by the second communication node to the third communication node may include an INITIAL CONTEXT SETUP RESPONSE, the UPLINK NAS TRANSPORT message, an NAS DELIVERY INDICATION message, or another message. The message may include one or more of the indication information of the preset terminal, the identifier of the first communication node, the partial information of the identifier of the first communication node, or the feedback of the first communication node. The feedback of the first communication node may include at least one of the identifier of the first communication node, the content of the feedback, the size of the feedback message, or whether the feedback succeeds.

In some embodiments, data sent to the first communication node includes one or more of the identifier of the network, a type of the network, an identifier of an operator, a type of an operator, an identifier of a server, a type of a server, or an identifier of a slice.

The first communication node and the second communication node may perform the network selection. When the first communication node and the second communication node perform the network selection, the data sent by the second communication node to the first communication node may include one or more of the identifier of the network, the type of the network, the identifier of the operator, the type of the operator, the identifier of the server, the type of the server, or the identifier of the slice. A data packet is not limited in the present disclosure.

Subscription information may be written in advance into the first communication node, such as a supported network, operator, and server to support services of the network, operator, and server. Therefore, the first communication node or the network needs to determine whether the services of the network, operator, and server are supported.

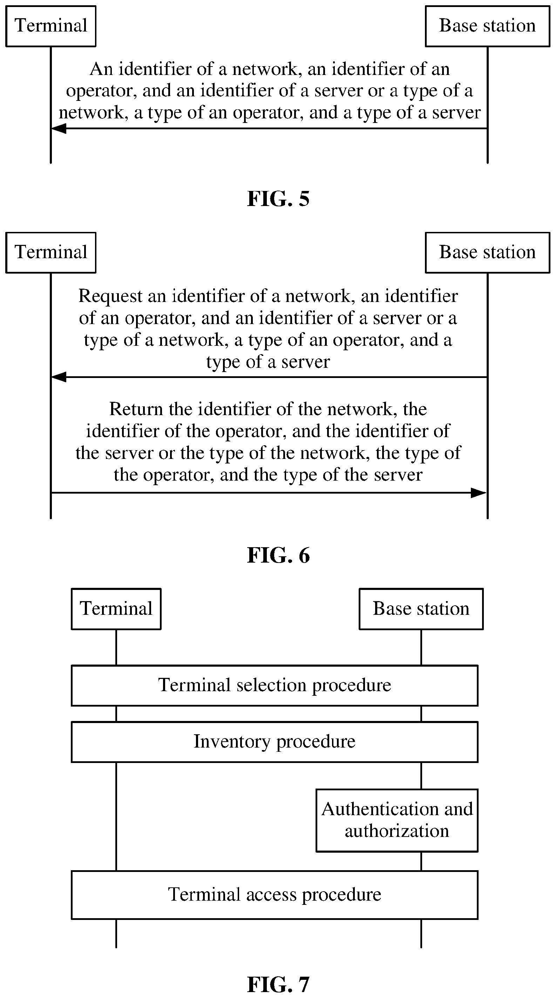

FIG. 5 is a flowchart of network selection according to some embodiments. As shown in FIG. 5, the base station sends the identifier of the network, the identifier of the operator, and the identifier of the server or sends the type of the network, the type of the operator, and the type of the server. For example, the base station broadcasts an identifier of a public land mobile network (PLMN), an identifier of an Internet of things network, and the identifier of the server.

The terminal may determine, according to information in the memory, whether the information in the memory is consistent with information sent by the base station. If the information in the memory is consistent with the information sent by the base station, the terminal considers that the network can provide a service for the terminal and that the terminal is selected, or the terminal may feed back information, respond to a message sent by the base station, and send a signal to the base station. If the information in the memory is inconsistent with the information sent by the base station, the terminal considers that the network cannot provide the service for the terminal and that the terminal is not selected, or the terminal feeds back no information, does not respond to the message sent by the base station, and sends no signal to the base station. For example, in the selection procedure (for example, a selection command or an inventory command), the base station sends the identifier of the PLMN, the identifier of the IoT network, the identifier of the server, and the like.

In some embodiments, data received from the first communication node includes one or more of the following supported by the first communication node: an identifier of a network, a type of a network, an identifier of an operator, a type of an operator, an identifier of a server, or a type of a server.

In the embodiments of the present disclosure, when the first communication node and the second communication node perform the network selection, the data sent by the second communication node to the first communication node may include one or more of the identifier of the network, the type of the network, the identifier of the operator, the type of the operator, the identifier of the server, or the type of the server. The data received from the first communication node is not limited in the present disclosure.

FIG. 6 is another flowchart of network selection according to some embodiments. As shown in FIG. 6, after reading the information about the terminal, the base station may choose, according to the information, whether to serve the terminal. The base station may require the terminal to report information. The information may be the identifier or type of the network, the identifier or type of the operator, and the identifier or type of the server supported by the terminal, such as an identifier of a PLMN, an identifier of an IoT network, and the identifier of the server. The base station may determine, according to the information, whether the base station supports the information. If the base station also supports the information, the base station considers that the terminal can provide a service for the base station, or the base station continues to operate on the terminal. If the base station does not support the information, the base station no longer operates on the terminal. For example, in the inventory procedure (for example, an inventory message), the base station may require the terminal to report the identifiers or types of the network, operator, and server supported by the terminal. When the terminal feeds back a response, the identifiers or types of the network, operator, and server supported by the terminal are carried in the feedback message.

In some embodiments, the data sent to the first communication node includes encryption information of the network or agreement information.

When the first communication node and the second communication node perform authentication and authorization, the data sent by the second communication node to the first communication node may include one or more of the encryption information of the network or the agreement information. Here, the agreement information may refer to information agreed between the first communication node and the second communication node. The data sent to the first communication node is not limited in the present disclosure.

In some embodiments, the data received from the first communication node includes the identifier of the first communication node, encryption information supported by the first communication node, agreement information supported by the first communication node, a data packet encrypted according to encryption information supported by the first communication node, or a data packet generated according to agreement information supported by the first communication node.

When the first communication node and the second communication node perform the authentication and authorization, the data received by the second communication node from the first communication node may include one or more of the identifier of the first communication node, the encryption information supported by the first communication node, the agreement information supported by the first communication node, the data packet encrypted according to the encryption information supported by the first communication node, or the data packet generated according to the agreement information supported by the first communication node. The data received from the first communication node is not limited in the present disclosure.

In some embodiments, before the second communication node operates on the first communication node, the second communication node and the first communication node need to complete an authentication and authorization process. In one aspect, the second communication node needs to authenticate the first communication node and reject a fake terminal. In the other aspect, the first communication node needs to authenticate the network to prevent data tampering.

FIG. 7 is a flowchart of authentication and authorization according to some embodiments. As shown in FIG. 7, the terminal may determine, according to the encryption information or the agreement information, whether the base station is a network served by the terminal. The base station may determine, according to the identifier of the terminal, the encryption information, or the agreement, whether the terminal is a tag served by the base station. Here, the agreement refers to a stipulation with which the terminal and the network comply. This stipulation may regulate an exchange format, exchange content, and an encryption algorithm and key between the terminal and the network. If the terminal and the network comply with the same agreement, the terminal and the network can identify information of each other. Otherwise, the terminal and the network cannot identify the information of each other.

In the selection procedure, the base station may send the encryption information of the network and the agreement information. For example, in the selection procedure (for example, the selection command or the inventory command), the base station sends the encryption information and the agreement information (such as channel state information (CSI)). The terminal may determine, according to the information in the memory, whether the information in the memory is consistent with the information sent by the base station.

If the information in the memory is consistent with the information sent by the base station, the terminal considers that the network can provide the service for the terminal and that the terminal is selected, or the terminal feeds back information, responds to the message sent by the base station, and send the signal to the base station. If the information in the memory is inconsistent with the information sent by the base station, the terminal considers that the network cannot provide the service for the terminal and that the terminal is not selected, or the terminal feeds back no information, does not respond to the message sent by the base station, and sends no signal to the base station.

The base station may require the terminal to report the information. The information may include a tag identifier, the encryption information, and the agreement information. Alternatively, the message may be the data packet encrypted according to the encryption information. Alternatively, the message may be the data packet generated according to the agreement information. For example, in the inventory procedure (for example, the inventory message), the base station may require the terminal to report the tag identifier, encryption information, and agreement information supported by the terminal. Alternatively, the base station may require the terminal to generate a feedback response according to the encryption information and the agreement information.

The base station may determine, according to the information, whether the terminal can serve the base station. If the base station also supports the information or the base station can decode the feedback response of the terminal, the base station considers that the terminal can provide the service for the base station, or the base station may continue to operate on the terminal. Otherwise, the base station no longer operates on the terminal.

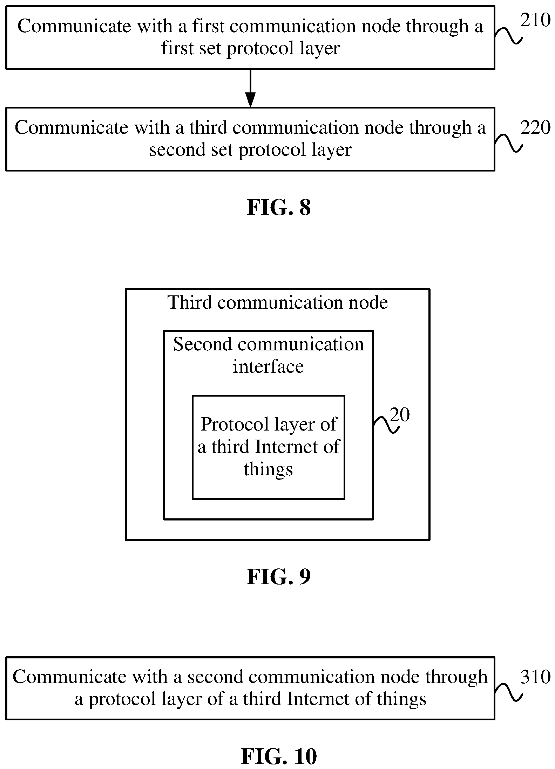

FIG. 8 is a flowchart of another data transmission method according to some embodiments.

The present disclosure provides a data transmission method. As shown in FIG. 8, the data transmission method may be applied by the second communication node of any embodiment of the present disclosure, and the method includes 210 and 220.

In 210, communication with a first communication node is performed through a first set protocol layer.

In 220, communication with a third communication node is performed through a second set protocol layer.

In some embodiments, the second communication node may communicate with the first communication node through the first set protocol layer of a first communication interface 10. Data transmitted between the second communication node and the first communication node through the first set protocol layer is data processed by a target communication node using a target processing method. The target communication node includes the first communication node and the second communication node. The target processing method is a method for processing data by the first communication node and the second communication node. The second communication node communicates with the third communication node through the second set protocol layer.

In some embodiments, the second communication node may communicate with the first communication node through a first protocol layer of a second Internet of things and a second protocol layer of the second Internet of things included in the protocol layer of the second Internet of things in the first set protocol layer.

In some embodiments, the second communication node may communicate with a fourth communication node through the first protocol layer of the second Internet of things and the second protocol layer of the second Internet of things included in the protocol layer of the second Internet of things in the first set protocol layer to communicate with the first communication node via the fourth communication node.

In some embodiments, the second communication node may communicate with the first communication node through the first protocol layer of the second Internet of things, the second protocol layer of the second Internet of things, and a third protocol layer of the second Internet of things included in the protocol layer of the second Internet of things in the first set protocol layer.

In some embodiments, the second communication node may communicate with the first communication node through the first protocol layer of the second Internet of things, the second protocol layer of the second Internet of things, the third protocol layer of the second Internet of things, and a fourth protocol layer of the second Internet of things included in the protocol layer of the second Internet of things in the first set protocol layer.

In some embodiments, the second communication node may communicate with the third communication node through a fifth protocol layer of the second Internet of things included in the second set protocol layer.

In some embodiments, the first set protocol layer may further include a first user plane protocol stack. The second communication node may communicate with the fourth communication node through an SDAP layer, a PDCP layer, an RLC protocol layer, a MAC protocol layer, and a PHY protocol layer.

Alternatively, the first set protocol layer may further include a first control plane protocol stack. The second communication node may communicate with the fourth communication node through an RRC protocol layer, the PDCP layer, the RLC protocol layer, the MAC protocol layer, and the PHY protocol layer.

In embodiments of the present disclosure, the second communication node in the Internet of things communicates with the first communication node through the first set protocol layer and communicates with the third communication node through the second set protocol layer, thereby implementing communication between communication nodes in the Internet of things.

In some embodiments, a message received from the third communication node includes first control information, and the first control information includes one or more of a first message type, an identifier of the first communication node, a first connection identifier, first indication information, a first feedback format, or first command content.

The first message type indicates a type of a message.

The first connection identifier indicates an identifier of a connection between the second communication node and the third communication node.

The first indication information indicates processing performed on the message.

The first feedback format indicates a format in which the first communication node provides feedback.

In some embodiments, a message sent to the third communication node includes second control information, and the second control information includes one or more of: a second message type, the identifier of the first communication node, a second connection identifier, second indication information, an execution result of the first communication node, or feedback of a result.

The second message type indicates a type of a message.

The second connection identifier indicates the identifier of the connection between the second communication node and the third communication node.

The second indication information indicates processing performed on the message.

In some embodiments, an exchange manner between the second communication node and the first communication node includes broadcasting or paging. Broadcasting or paging signaling is sent in a selection procedure or an inventory procedure, and one or more of the following information is broadcasted: information about a network, information about a terminal, or information about an inventory.

In some embodiments, the exchange manner between the second communication node and the first communication node includes transmitting dedicated signaling. The dedicated signaling is sent in the inventory procedure or an access procedure.

The dedicated signaling instructs the first communication node to send feedback information to the second communication node; or the dedicated signaling instructs the second communication node to send to the first communication node one or more of an access command, the information about the terminal, or a configuration of the network.

In some embodiments, the message received from the third communication node includes one or more of: indication information of a preset terminal; the identifier of the first communication node; partial data of the identifier of the first communication node; a range within which the message is sent; an identifier of a group of first communication nodes; an encryption key; encryption and decryption algorithms; an integrity protection algorithm; an agreement between the network and the first communication node; a resource for the connection between the third communication node and the second communication node; or the access command.

In some embodiments, the message sent to the third communication node includes one or more of: the indication information of the preset terminal, the identifier of the first communication node; the partial data of the identifier of the first communication node; or feedback of the first communication node.

In some embodiments, data sent to the first communication node includes one or more of an identifier of the network, a type of the network, an identifier of an operator, a type of an operator, an identifier of a server, a type of a server, or an identifier of a slice.

In some embodiments, data received from the first communication node includes one or more of the following supported by the first communication node: an identifier of a network, a type of a network, an identifier of an operator, a type of an operator, an identifier of a server, or a type of a server.

In some embodiments, the data sent to the first communication node includes encryption information of the network or agreement information.

In some embodiments, the data received from the first communication node includes the identifier of the first communication node, encryption information supported by the first communication node, agreement information supported by the first communication node, a data packet encrypted according to encryption information supported by the first communication node, or a data packet generated according to agreement information supported by the first communication node.

FIG. 9 is a structure diagram of a third communication node according to some embodiments.

Some embodiments of the present disclosure provide a third communication node. As shown in FIG. 9, the third communication node includes a second communication interface 20.

The third communication node is connected to the second communication node of any embodiment of the present disclosure through the second communication interface 20. Data transmitted between the third communication node and the second communication node through a protocol layer of a third Internet of things is data processed by a target communication node using a target processing method. The target communication node includes a first communication node and the second communication node. The target processing method is a method for processing data by the first communication node and the second communication node.

The third communication node may be an upper-layer node, for example, a core network. The third communication node may perform data transmission with the first communication node via the second communication node. The protocol layer of the third Internet of things may include a first protocol layer of the third Internet of things.

In the embodiments of the present disclosure, the third communication node in the Internet of things may perform data transmission with the second communication node through the protocol layer of the third Internet of things so that the third communication node accesses the Internet of things, thereby implementing data transmission between communication nodes in the Internet of things.

In some embodiments, the protocol layer of the third Internet of things of the second communication interface 20 includes the first protocol layer of the third Internet of things, where a function of the first protocol layer of the third Internet of things includes one or more of the functions below.

Data exchanged between the second communication node and the third communication node is generated based on an interface rule between the second communication node and the third communication node.

Data exchanged between the third communication node and the second communication node is transmitted.

Data transmitted from the second communication node is parsed.

The first protocol layer of the third Internet of things may be an IoT AP protocol layer of the third communication node.

FIG. 10 is a flowchart of another data transmission method according to some embodiments.

Some embodiments of the present disclosure provide a data transmission method. As shown in FIG. 10, the data transmission method may be applied by the third communication node of any embodiment of the present disclosure, and the method includes 310.

In 310, communication with a second communication node is performed through a protocol layer of a third Internet of things.

The third communication node may communicate with the second communication node through a first protocol layer of the third Internet of things included in the protocol layer of the third Internet of things.

In the embodiments of the present disclosure, the third communication node in the Internet of things may communicate with the second communication node through the protocol layer of the third Internet of things so that the third communication node accesses the Internet of things, thereby implementing communication between communication nodes in the Internet of things.

In some embodiments, the protocol layer of the third Internet of things includes the first protocol layer of the third Internet of things, where a function of the first protocol layer of the third Internet of things includes one or more of the functions below.

Data exchanged between the second communication node and the third communication node is generated based on an interface rule between the second communication node and the third communication node.

Data exchanged between the third communication node and the second communication node is transmitted.

Data transmitted from the second communication node is parsed.

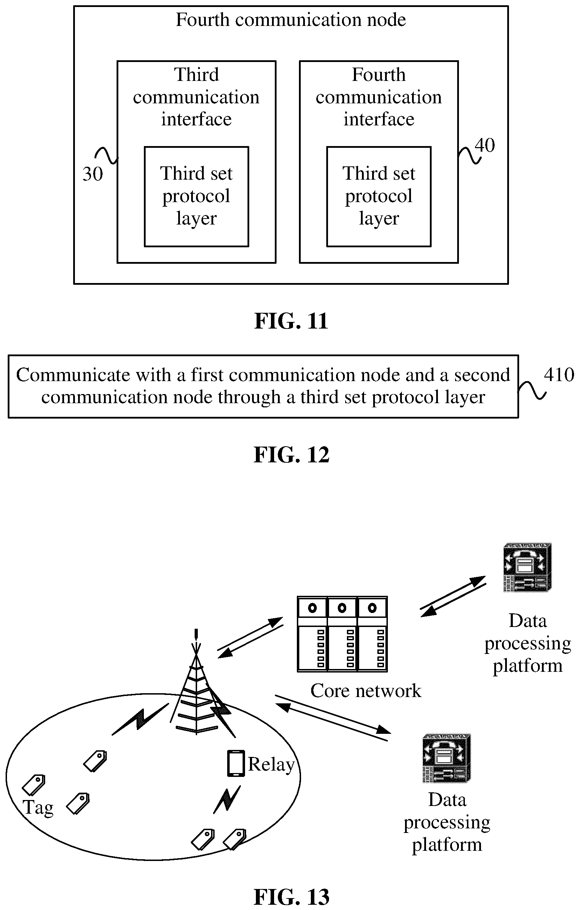

FIG. 11 is a structure diagram of a fourth communication node according to some embodiments.

Some embodiments of the present disclosure provide a fourth communication node. As shown in FIG. 11, the fourth communication node includes a third communication interface 30 and a fourth communication interface 40.

The fourth communication node is connected to the first communication node of any embodiment of the present disclosure through the third communication interface 30, and the fourth communication node is connected to a second communication node through the fourth communication interface 40. The fourth communication node forwards, through a third set protocol layer, data transmitted between the second communication node and the first communication node. The data transmitted between the second communication node and the first communication node is data processed by a target communication node using a target processing method, the target communication node includes the first communication node and the second communication node, and the target processing method is a method for processing data by the first communication node and the second communication node.

The fourth communication node may be a communication node for data forwarding (for example, a relay) to forward data exchanged between the first communication node and the second communication node. The third communication interface 30 may be an interface for data transmission between the first communication node and the fourth communication node. The fourth communication interface 40 may be an interface for data transmission between the fourth communication node and the second communication node. The third set protocol layer may include a protocol layer of a fourth Internet of things; or the third set protocol layer may include a protocol layer of a fourth Internet of things protocol layer and one of a second user plane protocol stack or a second control plane protocol stack.

In the embodiments of the present disclosure, the fourth communication node in the Internet of things forwards, through the third set protocol layer, the data transmitted between the second communication node and the first communication node so that the fourth communication node communicating with the first communication node accesses the Internet of things, thereby implementing data transmission between communication nodes in the Internet of things.

In some embodiments, the protocol layer of the fourth Internet of things included in the third set protocol layer includes a first protocol layer of the fourth Internet of things and a second protocol layer of the fourth Internet of things.

A function of the first protocol layer of the fourth Internet of things includes transmitting the data exchanged between the first communication node and the second communication node.

A function of the second protocol layer of the fourth Internet of things includes one or more of: generating a data packet, decoding a data packet, scheduling a data packet, transmitting a data packet, concatenating multiple data packets, maintaining a state, encryption, decryption, integrity protection, or generating a command identifiable by the first communication node. Of course, the second protocol layer of the fourth Internet of things may also have other functions, which are not limited in the present disclosure.

The first protocol layer of the fourth Internet of things may be an IoT PHY protocol layer of the fourth communication node. The second protocol layer of the fourth Internet of things may be an IoT MAC protocol layer of the fourth communication node.

In some embodiments, the third set protocol layer includes the second user plane protocol stack or the second control plane protocol stack.

In the case where the third set protocol layer includes the second user plane protocol stack, the fourth communication node may perform data transmission with the second communication node through the second user plane protocol stack. Here, the second user plane protocol stack may include an SDAP layer, a PDCP layer, an RLC protocol layer, a MAC protocol layer, and a PHY protocol layer.

In the case where the third set protocol layer includes the second control plane protocol stack, the fourth communication node may perform data transmission with the second communication node through the second control plane protocol stack. Here, the second control plane protocol stack may include an RRC protocol layer, the PDCP layer, the RLC protocol layer, the MAC protocol layer, and the PHY protocol layer.

FIG. 12 is a flowchart of another data transmission method according to some embodiments.

Some embodiments of the present disclosure provide a data transmission method. As shown in FIG. 12, the data transmission method may be applied by the fourth communication node of any embodiment of the present disclosure, and the method includes 410.

In 410, communication with a first communication node and a second communication node is performed through a third set protocol layer.

The fourth communication node forwards, through the third set protocol layer, data transmitted between the second communication node and the first communication node. The data transmitted between the second communication node and the first communication node is data processed by a target communication node using a target processing method. The target communication node includes the first communication node and the second communication node. The target processing method is a method for processing data by the first communication node and the second communication node.

The fourth communication node may communicate with the first communication node through a first protocol layer of the fourth Internet of things and a second protocol layer of the fourth Internet of things included in the third set protocol layer.

The fourth communication node may communicate with the second communication node through a second user plane protocol stack or a second control plane protocol stack included in the third set protocol layer.

In the embodiments of the present disclosure, the fourth communication node in the Internet of things may communicate with the first communication node and the second communication node separately, thereby implementing communication between communication nodes in the Internet of things.

It is to be noted that the second communication node, the third communication node, and the fourth communication node of the present disclosure may not only communicate with the first communication node of the present disclosure performing passive communication but also communicate with a first communication node performing active communication.

A process of data transmission between communication nodes is described below through different embodiments. It is to be noted that for technical details not described in the following embodiments, reference may be made to any one of the preceding embodiments.

FIG. 13 is a network deployment diagram of the Internet of things according to some embodiments. As shown in FIG. 13, a data processing platform is responsible for managing and operating on a tag (that is, a first communication node) and maintaining tag data. A core network (that is, a third communication node) is responsible for transmitting data of the data processing platform to a base station (that is, a second communication node) or transmitting data of the base station to the data processing platform. The base station is responsible for operating on the tag and sending data transmitted by the core network to the tag or sending data of the tag to the core network. In a scenario with a relay (that is, a fourth communication node), the relay is responsible for converting a command of the base station into a command identifiable by the tag and sending the command to the tag.

In some embodiments, in the case where a communication architecture of a cellular Internet of Things includes no relay, the communication architecture of the cellular Internet of Things includes an upper-layer node, a base station, and a terminal.

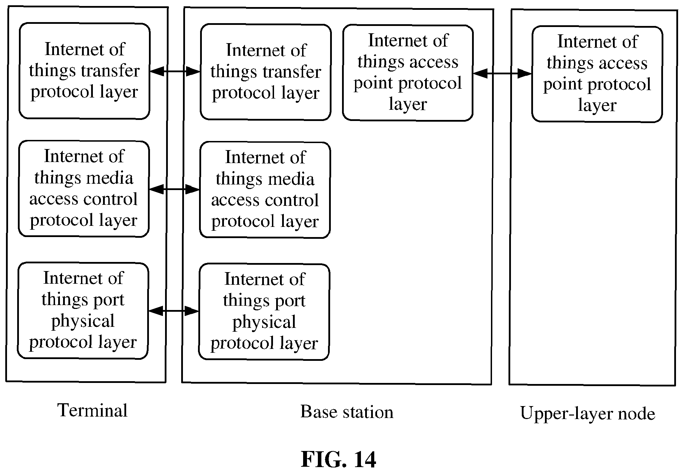

FIG. 14 is a block diagram of a first communication architecture of the Internet of things according to some embodiments. As shown in FIG. 14, the base station sends a command to the terminal as instructed by the upper-layer node. In FIG. 14, some protocol layers may be omitted, for example, an IoT transfer protocol layer is omitted. In this case, an IoT MAC protocol layer may have more functions.

For the upper-layer node and the base station, the upper-layer node and the base station perform data transmission with each other through an interface (that is, a second communication interface 20) between the upper-layer node and the base station, and a protocol layer (that is, a second set protocol layer or a protocol layer of a third Internet of things) of the interface between the upper-layer node and the base station includes an IoT AP protocol layer.

A function of the IoT AP protocol layer includes one of the functions below.

A data packet exchanged between the base station and the upper-layer node is generated according to an interface rule (that is, an interface rule between a second communication node and a third communication node).

A data packet is sent to a peer end (that is, data exchanged between a third communication node and a second communication node is transmitted).

A data packet is received and parsed at a peer end.

For the base station and the terminal, the base station and the terminal perform data transmission with each other through an interface (that is, a first communication interface 10) between the base station and the terminal, and a protocol layer (that is, a protocol layer of a first Internet of things or a first set protocol layer) of the interface between the base station and the terminal may include an IoT PHY protocol layer, the IoT MAC protocol layer, and the IoT transfer protocol layer.

A function of the IoT PHY protocol layer includes one of the functions below.

A signal is sent.

A signal is received.

A function of the IoT MAC protocol layer includes one of the functions below.

A data packet is generated or decoded.

A data packet is scheduled or transmitted.

Multiple data packets are concatenated.

A state is maintained. The state includes a state of a transmission process and a state of the terminal.

Encryption or decryption is performed.

Integrity protection is performed.

A command identifiable by the base station and the terminal is generated.

A function of the IoT transfer protocol layer includes one of the functions below.

The encryption or decryption is performed. The encryption or decryption refers to generating or decoding the data packet according to an encryption or decryption key or algorithm negotiated by the base station and the terminal.

The integrity protection is performed. The integrity protection refers to generating or decoding the data packet according to an integrity protection algorithm negotiated by the base station and the terminal.

The command identifiable by the base station and the terminal is generated.

For a downlink data packet, at a side of the upper-layer node, the upper-layer node may send the command for the terminal to the base station through the IoT AP protocol layer. At a side of the base station, the base station may generate, as instructed by the upper-layer node, the command identifiable by the terminal through the IoT transfer protocol layer, perform packetization through the IoT MAC protocol layer, and perform transmission through the IoT PHY protocol layer. At a side of the terminal, the data packet is received through the IoT PHY protocol layer, decoded through the IoT MAC protocol layer, and decrypted through the IoT transfer protocol layer.

In some embodiments, in the case where a communication architecture of a cellular Internet of Things includes no relay, the communication architecture of the cellular Internet of Things includes an upper-layer node, a base station, and a terminal.

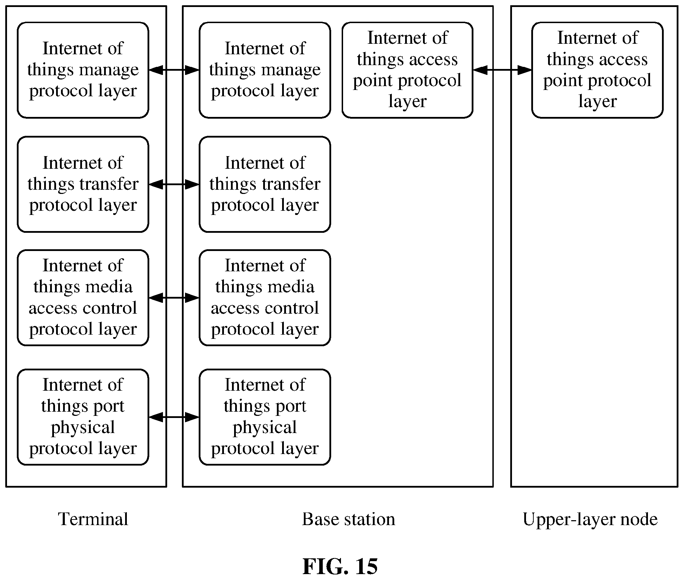

FIG. 15 is a block diagram of a second communication architecture of the Internet of things according to some embodiments. As shown in FIG. 15, the base station may send a data packet carrying control information to the terminal as instructed by the upper-layer node. In FIG. 15, some protocol layers may be omitted, for example, an IoT transfer protocol layer and an IoT manage protocol layer are omitted. In this case, an IoT MAC protocol layer may have more functions.

For the base station and the terminal, the base station and the terminal perform transmission with each other through an interface (that is, a first communication interface 10) between the base station and the terminal, and a protocol layer (that is, a protocol layer of a first Internet of things or a first set protocol layer) of the interface between the base station and the terminal may include an IoT PHY protocol layer, the IoT MAC protocol layer, the IoT manage protocol layer, and the IoT transfer protocol layer.

A function of the IoT MAC protocol layer includes one of the functions below.

A data packet is generated or decoded.

A data packet is scheduled or transmitted.

Multiple data packets are concatenated.

Encryption or decryption is performed.

Integrity protection is performed.

A command identifiable by the terminal is generated.

A function of the IoT manage protocol layer includes one of the functions below.

A state is maintained. The state includes a state of a transmission process and a state of the terminal.

The encryption or decryption is performed.

The integrity protection is performed.

Storage and configuration are performed.

A message is filled in or generated.

In some embodiments, in the case where a communication architecture of a cellular Internet of Things includes a relay, the communication architecture of the cellular Internet of Things may include an upper-layer node, a base station, the relay, and a terminal.

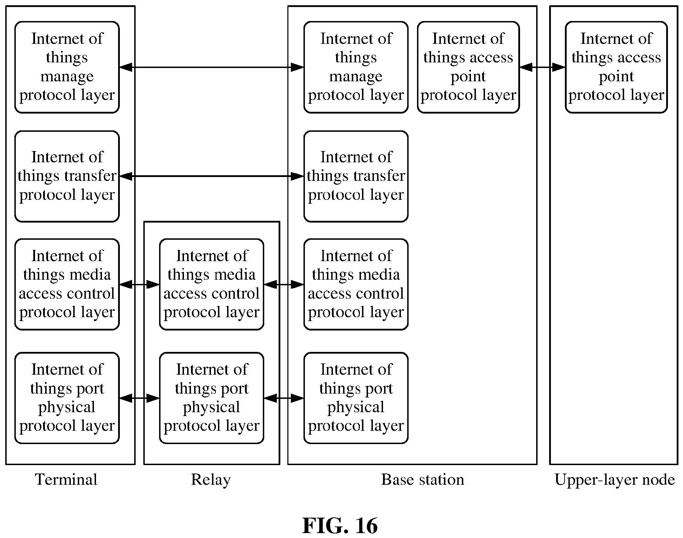

FIG. 16 is a block diagram of a third communication architecture of the Internet of things according to some embodiments. As shown in FIG. 16, if the relay has only an Internet of things protocol stack (that is, a protocol layer of an Internet of things (for example, a protocol layer of a fourth Internet of things)), the relay forwards a data packet sent by the base station to the terminal. In FIG. 16, some protocol layers may be omitted, for example, an IoT transfer protocol layer and an IoT manage protocol layer are omitted. In this case, an IoT MAC protocol layer may have more functions.

For downlink data, the upper-layer node triggers a data transmission process and sends a message to the base station through an IoT AP protocol layer. At a side of the base station, the base station may generate signaling identifiable by the terminal through the IoT manage protocol layer, perform encryption and integrity protection on the data packet through the IoT transfer protocol layer, perform packetization through the IoT MAC protocol layer, and perform transmission through an IoT PHY protocol layer. At a side of the relay, the relay receives the data packet and forwards the data packet to the terminal through the IoT MAC protocol layer and the IoT PHY protocol layer. At a side of the terminal, the terminal receives the data packet through the IoT PHY protocol layer, decodes the data packet through the IoT MAC protocol layer, decrypts the data packet through the IoT transfer protocol layer, and executes a command through the IoT manage protocol layer.

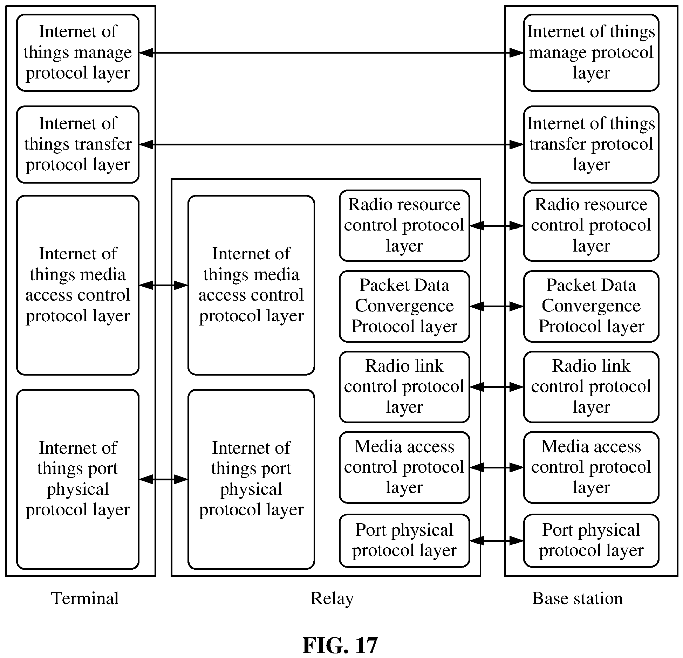

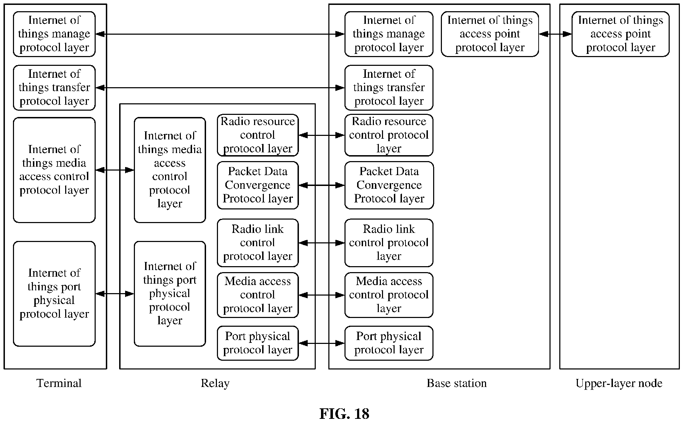

FIG. 17 is a block diagram of a fourth communication architecture of the Internet of things according to some embodiments. FIG. 18 is a block diagram of a fifth communication architecture of the Internet of things according to some embodiments.

As shown in FIGS. 17 and 18, if a relay has an Internet of things protocol stack and a New Radio (NR) or LTE protocol stack (that is, a second control plane protocol stack or a second user plane protocol stack), a base station may send data to the relay through a control plane, and the relay forwards a data packet sent by the base station to a terminal. In FIGS. 17 and 18, some protocol layers may be omitted, for example, an IoT transfer protocol layer and an IoT manage protocol layer are omitted. In this case, an IoT MAC protocol layer may have more functions.

For a downlink data packet, an upper-layer node triggers a data transmission process and sends a message to the base station through an IoT AP protocol layer. At a side of the base station, the base station generates signaling identifiable by the terminal through the IoT manage protocol layer and performs encryption and integrity protection on the data packet through the IoT transfer protocol layer. The base station generates a message identifiable by the relay through an RRC protocol layer, performs encryption and integrity protection corresponding to the relay through a PDCP layer, performs packetization through a MAC protocol layer, and performs transmission through a PHY protocol layer. At a side of the relay, the relay receives the data packet and forwards the data packet to the terminal through the RRC protocol layer, the PDCP layer, the MAC protocol layer, and the PHY protocol layer. At a side of the terminal, the terminal receives the data packet through an IoT PHY protocol layer, decodes the data packet through the IoT MAC protocol layer, decrypts the data packet through the IoT transfer protocol layer, and executes a command through the IoT manage protocol layer.

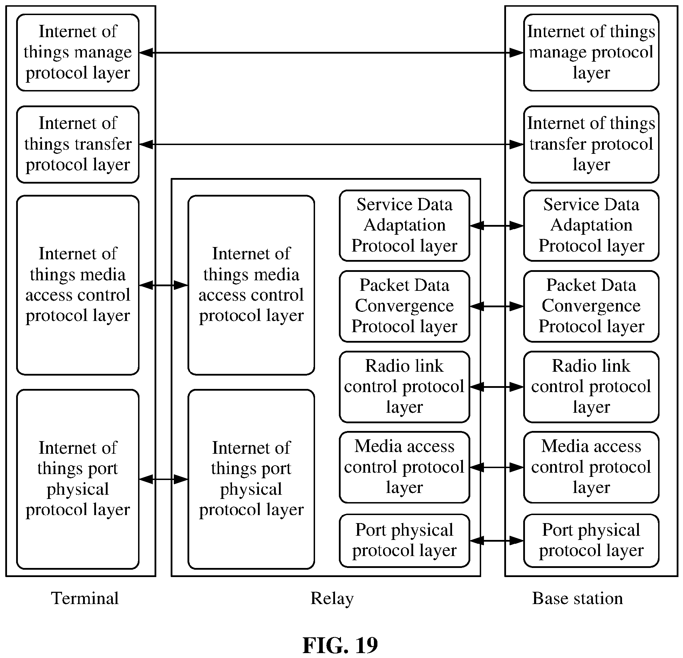

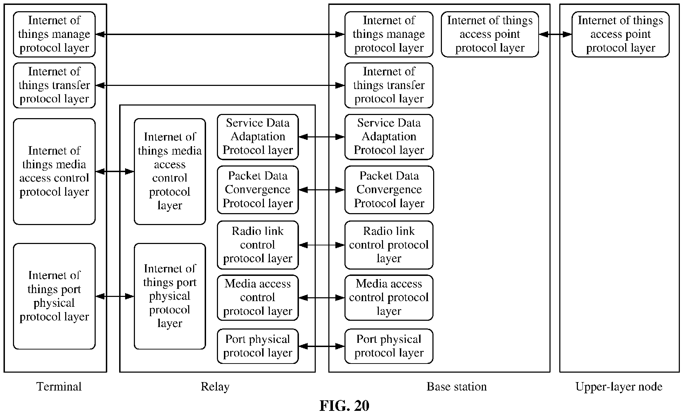

FIG. 19 is a block diagram of a sixth communication architecture of the Internet of things according to some embodiments. FIG. 20 is a block diagram of a seventh communication architecture of the Internet of things according to some embodiments.

As shown in FIGS. 19 and 20, if a relay has an Internet of things protocol stack and an NR or LTE protocol stack, a base station may send data to the relay through a user plane, and the relay forwards a data packet sent by the base station to a terminal. In FIGS. 19 and 20, some protocol layers may be omitted, for example, an IoT transfer protocol layer and an IoT manage protocol layer are omitted. In this case, an IoT MAC protocol layer may have more functions.

For a downlink data packet, an upper-layer node may trigger a data transmission process and send a message to the base station through an IoT AP protocol layer. At a side of the base station, the base station generates signaling identifiable by the terminal through the IoT manage protocol layer, performs encryption and integrity protection on the data packet through the IoT transfer protocol layer, maps the data packet to a resource block (RB) through an SDAP layer, performs encryption and integrity protection corresponding to the relay through a PDCP layer, performs packetization through as MAC protocol layer, and performs transmission through a PHY protocol layer. At a side of the relay, the relay receives the data packet and forwards the data packet to the terminal through the SDAP layer, an RLC protocol layer, the PDCP layer, the MAC protocol layer, and the PHY protocol layer. At a side of the terminal, the terminal receives the data packet through an IoT PHY protocol layer, decodes the data packet through the IoT MAC protocol layer, decrypts the data packet through the IoT transfer protocol layer, and executes a command through the IoT manage protocol layer.

In some embodiments, a base station establishes a connection with an upper-layer node (for example, a server or a core network), and the upper-layer node commands the base station to operate on a terminal corresponding to the base station. The upper-layer node and the base station communicate with each other through a control plane of the connection between the upper-layer node and the base station.

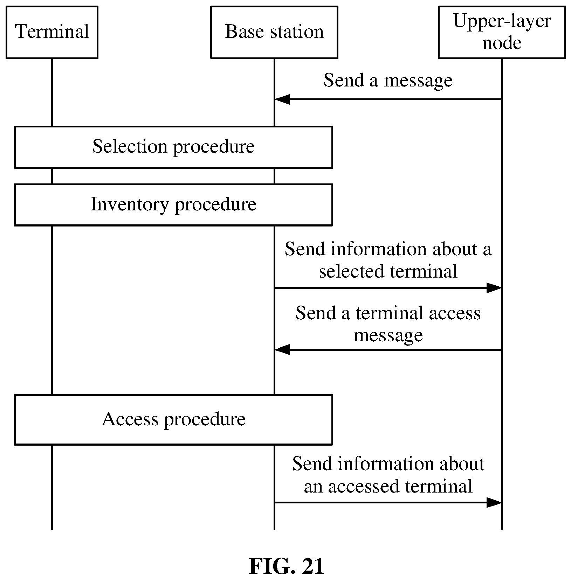

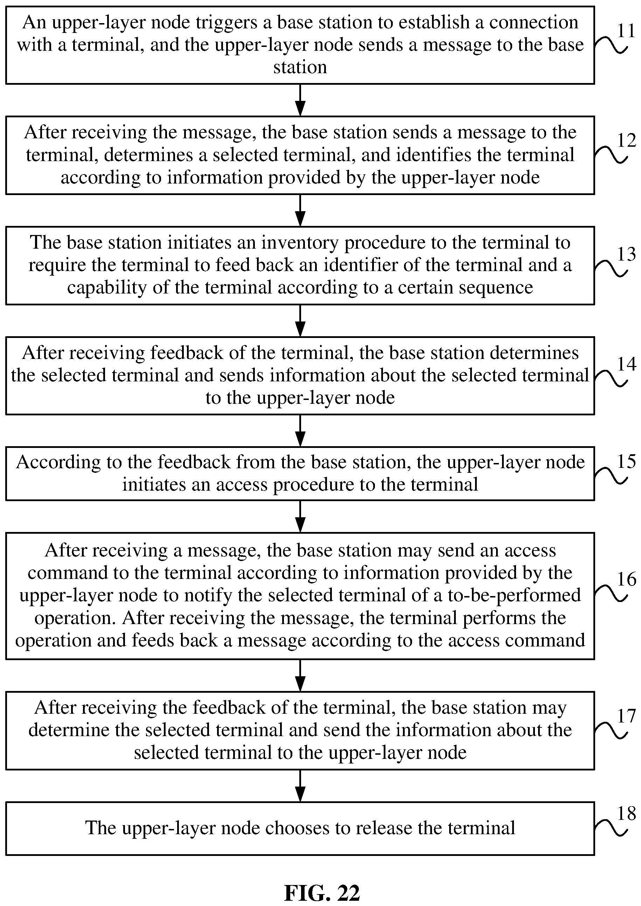

FIG. 21 is a flowchart of data exchanges between communication nodes in the Internet of things according to some embodiments. FIG. 22 is another flowchart of data exchanges between communication nodes in the Internet of things according to some embodiments. As shown in FIGS. 21 and 22, the data exchange process includes 11 to 18 (S11 to S18).

In 11, the upper-layer node triggers the base station to establish a connection with the terminal, and the upper-layer node sends a message to the base station. The message may be a paging message or another message. The message may carry at least one of an indication of a preset terminal; an identifier of the terminal or part of an identifier of the terminal; a range within which the message is sent; an identifier of a group of terminals; an encryption key; encryption and decryption algorithms; an integrity protection algorithm; an agreement between a network and the terminal; or a resource for the connection between the upper-layer node and the base station.

The indication of the preset terminal indicates that the message is for the preset terminal (for example, a tag).

The identifier of the terminal or part of the identifier of the terminal includes, for example, a personal computer (PC), an electronic product code (EPC), and 16-bit cyclic redundancy check (CRC-16), or part of the PC, EPC, and CRC-16.

The range within which the message is sent refers to which regions (for example, a range of a cell) the message needs to be transmitted in.

The identifier of the group of terminals is a unified identifier of multiple terminals.

The agreement between the network and the terminal includes, for example, a format of a feedback message.

In 12, after receiving the message, the base station sends a message to the terminal, determines a selected terminal, and identifies the terminal according to information provided by the upper-layer node. The message sent by the base station to the terminal is, for example, a selection message, an inventory message, or another message.

After the terminal receives the message, if the terminal meets a condition indicated in the message sent by the base station (for example, meets the identifier of the terminal, supports the network, supports the agreement between the network and the terminal, supports the encryption and decryption algorithms, or supports the integrity protection algorithm), the terminal considers that it is selected and responds and feeds back a message according to the agreement between the network and the terminal.

In 13, the base station initiates an inventory procedure to the terminal to require the terminal to feed back the identifier of the terminal and a capability of the terminal according to a certain sequence. After the terminal receives the inventory message from the base station, the terminal provides feedback to the base station.

In 14, after receiving the feedback of the terminal, the base station determines the selected terminal and sends information about the selected terminal to the upper-layer node. The information may include initial information about the terminal (INITIAL UE MESSAGE), an UPLINK NAS TRANSPORT message, or another message, and the information may carry at least one of the indication of the preset terminal; the identifier of the terminal or part of the identifier of the terminal; or a feedback message of the terminal.

The indication of the preset terminal indicates that the message is for the preset terminal.

The identifier of the terminal or part of the identifier of the terminal includes, for example, the PC, EPC, and CRC-16, or part of the PC, EPC, and CRC-16.

The feedback message of the terminal may include at least one of the identifier of the terminal, feedback content, a size of the feedback message, or whether the feedback succeeds. Feedback information of the terminal may include feedback information of multiple terminals.

In 15, according to the feedback from the base station, the upper-layer node initiates an access procedure to the terminal. The upper-layer node sends a message to the base station. The message may be an INITIAL CONTEXT SETUP REQUEST, a DOWNLINK NAS TRANSPORT message, or another message. The message may carry at least one of the indication of the preset terminal, an access command, the encryption key, the encryption and decryption algorithms, or the integrity protection algorithm.

The indication of the preset terminal indicates that the message is for the preset terminal.

The access command may include at least one of the identifier of the terminal, a type of the access command, the content of the access command, a size of the access command, or a format of a feedback command. The access command may include access commands for multiple terminals.

In 16, after receiving the message, the base station may send the access command to the terminal according to information provided by the upper-layer node to notify the selected terminal of a to-be-performed operation (such as read, write, lock, or inactivation). After receiving the message, the terminal performs the operation and feeds back a message according to the access command.

In 17, after receiving the feedback of the terminal, the base station may determine the selected terminal and send the information about the selected terminal to the upper-layer node. The information may be an INITIAL CONTEXT SETUP RESPONSE, an UPLINK NAS TRANSPORT message, an NAS DELIVERY INDICATION message, or another message, and the information may carry at least one of the indication of the preset terminal; the identifier of the terminal or part of the identifier of the terminal; or a feedback message.

The indication of the preset terminal indicates that the message is for the preset terminal.

The identifier of the terminal or part of the identifier of the terminal includes, for example, the PC, EPC, and CRC-16, or part of the PC, EPC, and CRC-16.

The feedback message may include at least one of the identifier of the terminal, the feedback content, the size of the feedback message, or whether the feedback succeeds. The feedback message may include feedback messages of multiple terminals.

In 18, the upper-layer node chooses to release the terminal. A message may be a terminal release command (UE CONTEXT RELEASE COMMAND) or another message, and the message may carry at least one of the indication of the preset terminal; or the identifier of the terminal or part of the identifier of the terminal.

The indication of the preset terminal indicates that the message is for the preset terminal.

The identifier of the terminal or part of the identifier of the terminal includes, for example, the PC, EPC, and CRC-16, or part of the PC, EPC, and CRC-16.

In some embodiments, a base station establishes a connection with an upper-layer node (for example, a server or a core network), and the upper-layer node commands the base station to operate on a terminal corresponding to the base station. The upper-layer node and the base station communicate with each other through a control plane of the connection between the upper-layer node and the base station.

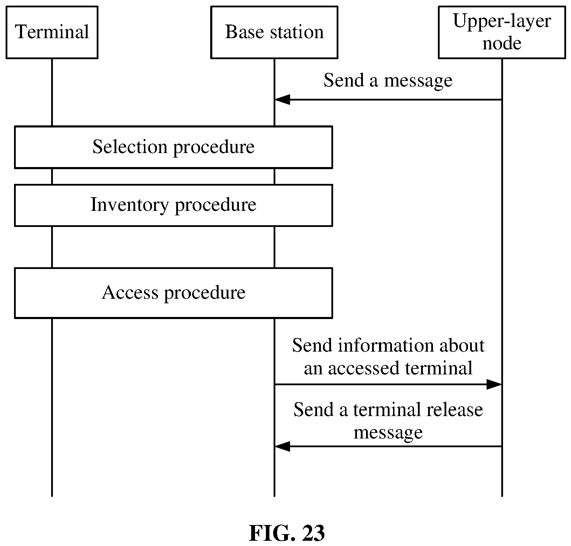

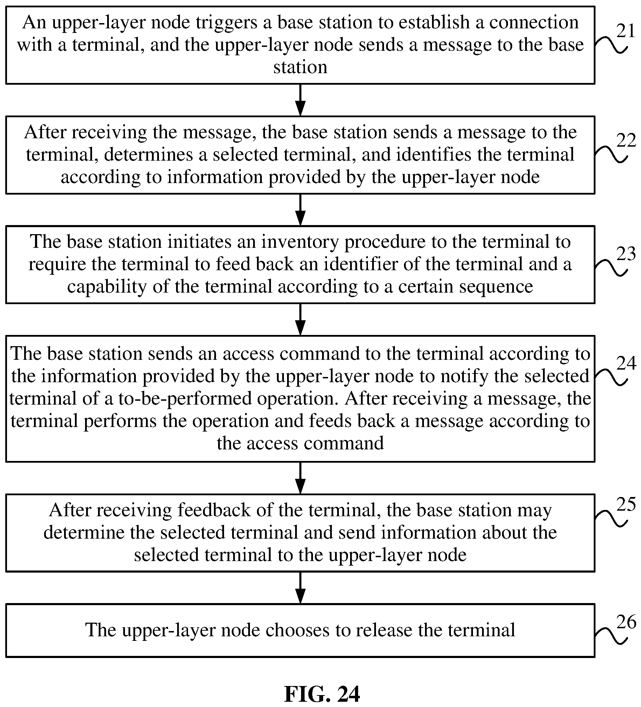

FIG. 23 is another flowchart of data exchanges between communication nodes in the Internet of things according to some embodiments. FIG. 24 is another flowchart of data exchanges between communication nodes in the Internet of things according to some embodiments. As shown in FIGS. 23 and 24, the data exchange process includes 21 to 26 (S21 to S26).

In 21, the upper-layer node triggers the base station to establish a connection with the terminal, and the upper-layer node sends a message to the base station. The message may include an INITIAL CONTEXT SETUP REQUEST message, a DOWNLINK NAS TRANSPORT message, or another message. The message may carry at least one of an indication of a preset terminal; an identifier of the terminal or part of an identifier of the terminal; a range within which the message is sent; an identifier of a group of terminals; an encryption key; encryption and decryption algorithms; an integrity protection algorithm; an agreement between a network and the terminal; a resource for the connection between the upper-layer node and the base station; or an access command.

The indication of the preset terminal indicates that the message is for the preset terminal.

The identifier of the terminal or part of the identifier of the terminal includes, for example, a PC, EPC, and CRC-16, or part of the PC, EPC, and CRC-16.

The range within which the message is sent refers to which regions (for example, a range of a cell) the message needs to be transmitted in.

The identifier of the group of terminals is a unified identifier of multiple terminals.

The agreement between the network and the terminal includes, for example, a format of a feedback message.

The access command may include at least one of the identifier of the terminal, a type of an access command, the content of the access command, a size of the access command, or the format of the feedback message. The access command may include access commands for multiple terminals.

In 22, after receiving the message, the base station may send a message to the terminal, determine a selected terminal, and identify the terminal according to information provided by the upper-layer node.

In 23, the base station initiates an inventory procedure to the terminal to require the terminal to feed back the identifier of the terminal and a capability of the terminal according to a certain sequence. After the terminal receives an inventory message from the base station, the terminal provides feedback to the base station.

In 24, the base station sends the access command to the terminal according to the information provided by the upper-layer node to notify the selected terminal of a to-be-performed operation (such as read, write, lock, or inactivation). After receiving a message, the terminal performs the operation and feeds back a message according to the access command.

In 25, after receiving the feedback of the terminal, the base station may determine the selected terminal and send information about the selected terminal to the upper-layer node. A message may be an INITIAL CONTEXT SETUP RESPONSE message, an UPLINK NAS TRANSPORT message, an NAS DELIVERY INDICATION message, or another message, and the message may carry at least one of the indication of the preset terminal; the identifier of the terminal or part of the identifier of the terminal; or a feedback message.

The indication of the preset terminal indicates that the message is for the preset terminal.

The identifier of the terminal or part of the identifier of the terminal includes, for example, the PC, EPC, and CRC-16, or part of the PC, EPC, and CRC-16.

The feedback message may include at least one of the identifier of the terminal, feedback content, a size of the feedback message, or whether the feedback succeeds. The feedback message may include feedback messages of multiple terminals.

In 26, the upper-layer node chooses to release the terminal. A message may be a terminal release command (UE CONTEXT RELEASE COMMAND) or another message, and the message may carry at least one of the indication of the preset terminal; or the identifier of the terminal or part of the identifier of the terminal.

The indication of the preset terminal indicates that the message is for the preset terminal.

The identifier of the terminal or part of the identifier of the terminal includes, for example, the PC, EPC, and CRC-16, or part of the PC, EPC, and CRC-16.

Embodiments of the present disclosure further provide a storage medium. The storage medium stores a computer program which, when executed by a processor, causes the processor to perform the data transmission method according to any embodiment of the present application.

For example, the data transmission method is applied by a terminal device. The data transmission method includes determining to-be-transmitted information, where the to-be-transmitted information instructs a management entity to perform resource selection for the terminal device; and transmitting the to-be-transmitted information to the management entity.

For example, the data transmission method is applied by a management entity. The data transmission method includes acquiring to-be-transmitted information, where the to-be-transmitted information instructs the management entity to perform resource selection for a terminal device; and performing the resource selection based on the to-be-transmitted information.

The storage medium according to the embodiments of the present disclosure may be one computer-readable medium or any combination of multiple computer-readable media. The computer-readable medium may be a computer-readable signal medium or a computer-readable storage medium.

The computer-readable storage medium may be, but is not limited to, an electrical, magnetic, optical, electromagnetic, infrared, or semiconductor system, apparatus or device or any combination thereof. The computer-readable storage medium includes an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, and any combination thereof. The computer-readable storage medium may be any tangible medium including or storing a computer program. The computer program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by multiple media including, but not limited to, a wireless medium, a wire, an optical cable, a radio frequency (RF), and any combination thereof.

Computer program codes for performing operations of the present disclosure may be written in one or more programming languages or a combination thereof. The programming languages include object-oriented programming languages such as Java, Smalltalk, and C++ and may further include conventional procedural programming languages such as "C" and similar programming languages. The program codes may be executed entirely on a user computer, executed partly on a user computer, executed as a stand-alone software package, executed partly on a user computer and partly on a remote computer, or executed entirely on a remote computer or a server. The remote computer may be connected to the user computer through any type of network including a local area network (LAN) or a wide area network (WAN), or may be connected to an external computer (for example, via the Internet provided by an Internet service provider).

The preceding are example embodiments of the present disclosure and are not intended to limit the scope of the present disclosure.

It is to be understood by those skilled in the art that the term "user equipment" encompasses any suitable type of radio user device, for example, a mobile phone, a portable data processing apparatus, a portable web browser, or a vehicle-mounted mobile station.

Embodiments of the present disclosure may be implemented in hardware or special-purpose circuits, software, logic, or any combination thereof. For example, some embodiments may be implemented in hardware while other embodiments may be implemented in firmware or software executable by a controller, a microprocessor, or another computing apparatus, though the present disclosure is not limited thereto.

Embodiments of the present disclosure may be implemented through the execution of computer program instructions by a data processor of a mobile apparatus. For example, the embodiments of the present disclosure are implemented through the execution of computer program instructions by a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present disclosure may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any data storage technology, such as, but not limited to, a ROM, a RAM, or an optical memory device and system (for example, a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present disclosure is provided above through exemplary and non-limiting examples. However, considering the drawings and the claims, various modifications and adjustments to the preceding embodiments are apparent to those skilled in the art and do not deviate from the scope of the present disclosure. Accordingly, the proper scope of the present disclosure is determined according to the claims.

## Claims

1. A first communication node, comprising:
a first communication interface, wherein the first communication node is connected to a second communication node through the first communication interface;
wherein data transmitted between the first communication node and the second communication node through a protocol layer of a first Internet of things is data processed by a target communication node using a target processing method, the target communication node comprises the first communication node and the second communication node, the target processing method is a method for processing data by the first communication node and the second communication node, and the protocol layer of the first Internet of things is a protocol layer comprised in the first communication node in an Internet of things; and
wherein the first communication node is a passive communication node.

2. The first communication node of claim 1, wherein the protocol layer of the first Internet of things of the first communication interface comprises:
a first protocol layer of the first Internet of things configured to transmit data exchanged between the first communication node and the second communication node, and
a second protocol layer of the first Internet of things configured to perform at least one of the following: generating a data packet, decoding a data packet, scheduling a data packet, transmitting a data packet, concatenating a plurality of data packets, extracting a data packet, maintaining a state, encryption, decryption, integrity protection, or generating a command identifiable by the second communication node.

3. The first communication node of claim 2, wherein the protocol layer of the first Internet of things further comprises a third protocol layer of the first Internet of things configured to perform at least one of the following:
maintaining the state, the encryption, the decryption, the integrity protection, storage and configuration, filling in a message, generating a message, or executing a control procedure.

4. The first communication node of claim 2 or 3, wherein the protocol layer of the first Internet of things further comprises a fourth protocol layer of the first Internet of things configured to process data by one or more of the following target processing methods:
the encryption, the decryption, the integrity protection, or generating the command identifiable by the second communication node.

5. A second communication node, comprising:
a first communication interface and a second communication interface, wherein the second communication node is connected to the first communication node of any one of claims 1 to 4 through the first communication interface, and the second communication node is connected to a third communication node through the second communication interface;
wherein data transmitted between the second communication node and the first communication node through a first set protocol layer is data processed by a target communication node using a target processing method, the target communication node comprises the first communication node and the second communication node, and the target processing method is a method for processing data by the first communication node and the second communication node; and
wherein the second communication node communicates with the third communication node through a second set protocol layer.

6. The second communication node of claim 5, wherein the first set protocol layer of the first communication interface comprises a protocol layer of a second Internet of things, and the protocol layer of the second Internet of things comprises:
a first protocol layer of the second Internet of things configured to transmit data exchanged between the first communication node and the second communication node; and
a second protocol layer of the second Internet of things configured to perform at least one of the followings: generating a data packet, decoding a data packet, scheduling a data packet, transmitting a data packet, concatenating a plurality of data packets, maintaining a state, encryption, decryption, integrity protection, or generating a command identifiable by the first communication node.

7. The second communication node of claim 6, wherein the protocol layer of the second Internet of things in the first set protocol layer further comprises a third protocol layer of the second Internet of things configured to perform at least one of the followings:
maintaining the state, the encryption, the decryption, the integrity protection, storage and configuration, filling in a message, generating a message, or executing a control procedure.

8. The second communication node of claim 6 or 7, wherein the protocol layer of the second Internet of things in the first set protocol layer further comprises a fourth protocol layer of the second Internet of things configured to process data by one or more of the following target processing methods:
the encryption, the decryption, the integrity protection, or generating the command identifiable by the first communication node.

9. The second communication node of claim 5, wherein the second set protocol layer of the second communication interface comprises a fifth protocol layer of the second Internet of things configured to perform at least one of the following:
generating, based on an interface rule between the second communication node and the third communication node, data exchanged between the second communication node and the third communication node;
transmitting data exchanged between the third communication node and the second communication node; or
parsing data transmitted from the third communication node.

10. The second communication node of claim 5, wherein the first set protocol layer comprises a first user plane protocol stack or a first control plane protocol stack.

11. The second communication node of claim 5, wherein a message received from the third communication node comprises first control information, and the first control information comprises at least one of:
a first message type indicating a type of the message;
an identifier of the first communication node;
a first connection identifier indicating an identifier of a connection between the second communication node and the third communication node;
first indication information indicating processing performed on the message;
a first feedback format indicating a format in which the first communication node provides feedback; or
first command content.

12. The second communication node of claim 5, wherein a message sent to the third communication node comprises second control information, and the second control information comprises at least one of:
a second message type indicating a type of the message;
an identifier of the first communication node;
a second connection identifier indicating an identifier of a connection between the second communication node and the third communication node;
second indication information indicating processing performed on the message;
an execution result of the first communication node; or
feedback of a result.

13. The second communication node of claim 5, wherein an exchange manner between the second communication node and the first communication node comprises broadcasting or paging, broadcasting or paging signaling is sent in a selection procedure or an inventory procedure, and at least one of the following information is broadcasted:
information about a network, information about a terminal, or information about an inventory.

14. The second communication node of claim 5, wherein an exchange manner between the second communication node and the first communication node comprises transmitting dedicated signaling, and the dedicated signaling is sent in an inventory procedure or an access procedure;
wherein the dedicated signaling instructs the first communication node to send feedback information to the second communication node; or the dedicated signaling instructs the second communication node to send to the first communication node at least one of an access command, information about a terminal, or a configuration of a network.

15. The second communication node of claim 5, wherein a message received from the third communication node comprises at least one of:
type information of the first communication node;
an identifier of the first communication node;
partial data of an identifier of the first communication node;
a range within which the message is sent;
an identifier of a group of first communication nodes;
an encryption key;
encryption and decryption algorithms;
an integrity protection algorithm;
an agreement between a network and the first communication node;
a resource for a connection between the third communication node and the second communication node; or
an access command.

16. The second communication node of claim 5, wherein a message sent to the third communication node comprises at least one of:
type information of the first communication node;
an identifier of the first communication node;
partial data of an identifier of the first communication node; or
feedback of the first communication node.

17. The second communication node of claim 5, wherein data sent to the first communication node comprises one or more of an identifier of a network, a type of a network, an identifier of an operator, a type of an operator, an identifier of a server, a type of a server, or an identifier of a slice.

18. The second communication node of claim 5, wherein data received from the first communication node comprises at least one of the following supported by the first communication node: an identifier of a network, a type of a network, an identifier of an operator, a type of an operator, an identifier of a server, or a type of a server.

19. The second communication node of claim 5, wherein data sent to the first communication node comprises:
encryption information of a network or agreement information.

20. The second communication node of claim 5, wherein data received from the first communication node comprises:
an identifier of the first communication node, encryption information supported by the first communication node, agreement information supported by the first communication node, a data packet encrypted according to encryption information supported by the first communication node,
or a data packet generated according to agreement information supported by the first communication node.

21. A third communication node, comprising:
a second communication interface, wherein the third communication node is connected to the second communication node of any one of claims 5 to 20 through the second communication interface; and
wherein data transmitted between the third communication node and the second communication node through a protocol layer of a third Internet of things is data processed by a target communication node using a target processing method, the target communication node comprises a first communication node and the second communication node, and the target processing method is a method for processing data by the first communication node and the second communication node.

22. The third communication node of claim 21, wherein the protocol layer of the third Internet of things of the second communication interface comprises a first protocol layer of the third Internet of things configured to perform at least one of the following:
generating, based on an interface rule between the second communication node and the third communication node, data exchanged between the second communication node and the third communication node;
transmitting data exchanged between the third communication node and the second communication node; or
parsing data transmitted from the second communication node.

23. A fourth communication node, comprising:
a third communication interface and a fourth communication interface, wherein the fourth communication node is connected to the first communication node of any one of claims 1 to 4 through the third communication interface, and the fourth communication node is connected to a second communication node through the fourth communication interface; and
wherein the fourth communication node forwards, through a third set protocol layer, data transmitted between the second communication node and the first communication node, the data transmitted between the second communication node and the first communication node is data processed by a target communication node using a target processing method, the target communication node comprises the first communication node and the second communication node, and the target processing method is a method for processing data by the first communication node and the second communication node.

24. The fourth communication node of claim 23, wherein the third set protocol layer comprises a protocol layer of a fourth Internet of things, and the protocol layer of the fourth Internet of things comprises:
a first protocol layer of the fourth Internet of things configured to transmit data exchanged between the first communication node and the second communication node; and
a second protocol layer of the fourth Internet of things configured to perform at least one of the following: generating a data packet, decoding a data packet, scheduling a data packet, transmitting a data packet, concatenating a plurality of data packets, maintaining a state, encryption, decryption, integrity protection, or generating a command identifiable by the first communication node.

25. The fourth communication node of claim 24, wherein the third set protocol layer further comprises a second user plane protocol stack or a second control plane protocol stack.

26. A data transmission method, applied by the first communication node of any one of claims 1 to 4, comprising:
communicating with a second communication node through the protocol layer of the first Internet of things.

27. A data transmission method, applied by the second communication node of any one of claims 5 to 20, comprising:
communicating with the first communication node through the first set protocol layer; and
communicating with the third communication node through the second set protocol layer.

28. A data transmission method, applied by the third communication node of claim 21 or 22, comprising:
communicating with the second communication node through the protocol layer of the third Internet of things.

29. A data transmission method, applied by the fourth communication node of any one of claims 23 to 25, comprising:
communicating with the first communication node and the second communication node through the third set protocol layer.

30. A computer-readable storage medium storing a computer program which, when executed by a processor, causes the processor to perform the data transmission method of any one of claims 26 to 29.
